# EUROPEAN PATENT SPECIFICATION

(11) **EP 4 266 445 B1**
(45) Date of publication and mention of the grant of the patent: **07.01.2026**
(21) Application number: 21905127.3
(22) Date of filing: 31.08.2021
(51) Int. Cl.: H01M 10/0567, C07D 333/46, C07F 5/02

(54) **SULFUR-BASED BORON TRIFLUORIDE SALT ELECTROLYTE CONTAINING UNSATURATED HETEROCYCLE, PREPARATION METHOD THEREFOR AND USE THEREOF**
SCHWEFELBASIERTER BORTRIFLUORIDSALZELEKTROLYT MIT UNGESÄTTIGTEM HETEROCYCLUS, HERSTELLUNGSVERFAHREN DAFÜR UND VERWENDUNG DAVON
ÉLECTROLYTE À SEL DE TRIFLUORURE DE BORE À BASE DE SOUFRE CONTENANT UN HÉTÉROCYCLE INSATURÉ, SON PROCÉDÉ DE PRÉPARATION ET SON UTILISATION

(30) Priority: 17.12.2020 CN 202011498635
(43) Date of publication of application: 25.10.2023
(73) Proprietor: Beijing WeLion New Energy Technology Co., Ltd, Beijing 102402 (CN)
(72) Inventor: YANG, Qi, Beijing 102402 (CN); CHENG, Yongbin, Beijing 102402 (CN); YU, Huigen, Beijing 102402 (CN)
(74) Representative: reuteler & cie SA
(86) International application number: PCT/CN2021/115604
(87) International publication number: WO 2022/127194

(56) References cited:
- CN-A- 105 680 096
- CN-A- 105 895 957
- CN-A- 106 946 925
- JP-A- 2019 048 792
- US-A- 6 045 948

## Description

### FIELD

The present disclosure relates to the technical field of battery, in particular to a sulfur-based boron trifluoride salt electrolyte containing unsaturated heterocycle and a method and a use thereof.

### BACKGROUND

Due to the widespread use of portable electronic devices and the increasing popularity of electric vehicles, secondary batteries have attracted extensive attention over the past few decades. Secondary batteries with high energy density have occupied a large market share in mobile phones, portable electronic products and electric vehicles, however, the demands such as large-scale energy storage have imposed higher requirements on the capacity and energy density of batteries, and the requirements on the battery materials are also continuously increased.

Taking the lithium battery as an example, in order to improve the energy density of the battery, the working voltage and the discharge capacity of the battery need to be improved, a high-voltage high-capacity anode material and a low-voltage high-capacity cathode material are used; such as high voltage lithium cobalt oxide (LCO), high nickel ternary materials (NCM 811, NCM622, NCM532, and NCA), lithium nickel manganese oxide (LNMO) and other anode materials, and metallic lithium, graphite, silicon-oxygen carbon and other cathode materials. In addition, the electrolyte with a wide electrochemical window shall be matched, or a stable passivation layer is formed on the electrode surface, so as to improve the cycle stability of the battery.

The electrolytes mainly include a liquid-state electrolyte and a solid-state electrolyte. Although the current commercially available batteries mainly use the liquid-state electrolyte, which has significant advantages such as high conductivity, and desirable wettability on the electrode surface, the development of the liquid-state electrolyte confronts a bottleneck because of the disadvantages of the liquid-state electrolyte such as leakage, volatility, flammability, and insufficient thermal stability. Solid-state electrolytes, which have a higher safety and thermal stability than liquid-state electrolytes, are a promising option for solving or alleviating these problems. Moreover, the solid-state electrolytes can effectively inhibit the formation of lithium dendrite, so that an use of a metallic lithium cathode is possible. Although the solid-state electrolytes have significant advantages, there are some deficiencies, such as low ionic conductivity of the polymer electrolyte; the oxide electrolyte has extremely high hardness and large brittleness, and the electrolyte-electrode interface resistance is large; the sulfide electrolyte suffers from a high processing difficulty, high costs, large interface resistance, and the extremely high sensitivity to air, the problems have hampered the wide us of the solid-state electrolytes.

When the high-voltage anode and the low-voltage cathode in the batteries are matched with the conventional electrolyte, a part of the ions escaped from the anode will be consumed in the first charge and discharge cycle, and a passivation layer which only conducts ions and does not conduct electrons is formed on the surface of the anode particles and the cathode particles. The formed passivation layer has a protective effect on the anode and cathode, so that the anode, the cathode, and the electrolyte are more stable, thereby determining the electrochemical properties of the battery, such as charge and discharge performance, storage performance, and cycle life. If the formed passivation layer is unstable, the passivation layer is continuously damaged and formed along with an increase of the cycle number, so that the active ions in the battery are continuously consumed, thus the first cycle discharge capacity of the battery is low, the capacity attenuation is serious, and the battery rapidly loses efficacy. In order to improve stability of the battery in the cyclic process, the liquid-state electrolyte is generally added with some membrane-forming additives such as organic membrane-forming additive FEC (fluoroethylene carbonate), VC (vinylene carbonate), VEC (vinyl ethylene carbonate), PS (propylene sulfite), 1,3-PS (1,3-propane sultone), for example, the main components of the SEI passivation membrane formed on the cathode surface include various inorganic components (e.g., Li₂CO₃, LiF, Li₂O, LiOH) and various organic components (e.g., ROCOOLi, ROLi, ROCOOLi). Since the conventional membrane-forming additive does not contain dissociable ions, a surface passivation layer can only be formed by consuming ions of an anode, thus both the first cycle efficiency and the discharge specific capacity of the battery are low. If the added salt/additive can form a passivation layer that conducts ions and has desirable stability on the surface of the electrode, the liquid-state electrolyte and polymer electrolyte with narrow electrochemical windows can be used in a high-voltage battery system, and the energy density and the cycle life of the battery can be greatly improved. In addition, the salt synthesis/purification process of the currently commercially available electrolyte is complex and expensive, which causes high costs for the whole battery, if the salt synthesis/purification process of a new kind of electrolyte is simple and affordable, such that it partially or completely replaces the salt of electrolyte in the prior art, the produced batteries can balance the excellent performance and lower cost.

One research team of the applicant has been conducting research on the structure of organic salts. It has been unexpectedly discovered in an occasional study that when the sulfur-based boron trifluoride organic salts, particularly bis-SBF₃M substituted organics, are used in the liquid-state and solid-state electrolytes in batteries, the salts exhibit superior performance and surprising effect in the testing. While in the prior art, no study has been conducted on the use of bis- substituted sulfur-based boron trifluoride organic salts in batteries, only a few individual researchers have conducted sporadic studies on compounds containing -S-BF₃ group.

CN105789701A discloses an electrolyte additive comprising a hydrogenated thiophene-boron trifluoride complex and lithium fluorophosphate, wherein the hydrogenated thiophene-boron trifluoride complex complex is at least one selected from the compounds with a structure represented by formula (1): wherein R₁, R₂, R₃ and R₄ are respectively and independently selected from hydrogen atom, halogen atom, cyano group, substituted or unsubstituted C1-20 alkyl group, substituted or unsubstituted C2-20 alkenyl group and substituted or unsubstituted C6-26 aryl group; the substituent is selected from halogen and cyano group. However, the compound pertains to the complex compound, it is not a sulfur-based salt, and there are few achieved important research results at present, let alone the research result having an industrial application.

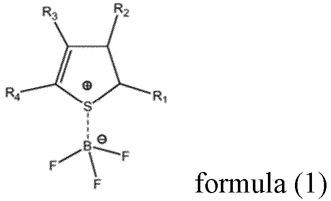

CN106946925 relates to lithium fluoroalkyloxyl trifluoroborate, and a preparation method and applications thereof for use as ion battery electrolyte.

The applicant has surprisingly discovered that the -SBF₃M bis - substituted salt has desirable effects in batteries so that a group has been specially established to focus on the research of the -SBF₃M bis -substituted salt and achieved the desired results.

The present disclosure has conducted independent research on the structure with the group -SBF₃M linked to a heterocycle, in particular to unsaturated heterocycle. The reason is that the chemical properties (e.g., electrical properties) of the heteroatom and unsaturated bond are specific, when they exist on the ring, they will affect the chemical and physical properties of the entire ring, and they are substantially different from carbocyclic rings, aromatic rings, chain structures and the like, thus their mutual relationship or deducibility is uncertain. Therefore, when the group -SBF₃M is linked to an unsaturated heterocycle, the effects is different from those made from other structures, especially when two -SBF₃M are linked, which produce more unexpected and excellent effects. Therefore, the research object of the present application is determined to be -S-BF₃M directly or indirectly connected to the unsaturated heterocycle, thus the specific circumstance of the group -S-BF₃M connected with the unsaturated heterocycle can be more expressly determined.

### SUMMARY

The present disclosure aims to solve the defects in the prior art, and provides a sulfur-based boron trifluoride salt electrolyte containing an unsaturated heterocycle, a preparation method and the use thereof. The boron trifluoride salt has multiple effects, and can be used as an electrolyte additive and also be used as a salt, and a polymerizable monomer can also be used as a single-ion conductor polymer electrolyte and a polymer skeleton after polymerization. When the boron trifluoride salt is used as an electrolyte additive, a stable passivation layer is formed on the electrode, and the boron trifluoride salt per se contains M ions, so that the ions provided by the electrode are less consumed in the membrane forming process, such that the first cycle efficiency and the cycle performance of the battery can be significantly improved when the boron trifluoride salt is used as the additive; when the boron trifluoride salt is used as salt in electrolyte, the boron trifluoride salt synthesized in the present disclosure exhibits the desirable ion transmission and stable electrochemical performance. When the boron trifluoride salt is used as a single-ion conductor polymer electrolyte, the battery shows very excellent cycle performance. The electrolyte can be applied in a liquid-state battery, a solid-liquid hybrid battery, a semi-solid-state battery, a gel battery, a quasi-solid-state battery, and an all-solid-state battery, and helps to improve the energy density, cycle stability, and service life of the battery. The present disclosure is directed at overcoming the deficiencies in the prior art.

The purpose of the present disclosure is realized by the following technical scheme:

One inventive concept of the present disclosure is to provide a sulfur-based boron trifluoride salt electrolyte containing an unsaturated heterocycle comprising an unsaturated heterocyclic sulfur-based boron trifluoride salt represented by general formula I: 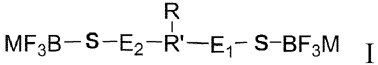 in the general formula I, R' represents an unsaturated heterocycle at least containing one heteroatom and at least one unsaturated bond; the unsaturated heterocycle is a five- to six -membered ring; the heteroatom is selected from the group consisting of S, N, O, P, or Si; M is metal cation, wherein M in general formula I comprises Na⁺, K⁺ or Li⁺; E₁ and E₂ are independently nonexistent, or selected from the group consisting of nonexistent, -CH₂-, carbonyl, ester groups, ethyl, n-propyl, isopropyl, n-butyl, isobutyl, n-pentyl, isopentyl, sec-pentyl, neopentyl, hexyl, vinyl, propenyl, butenyl, pentenyl, ethynyl, propynyl, butynyl, cyclohexyl, cyclopentyl, 1,3-hexadienyl, -C=N-, -C(CH₃)₂-, -CH(CH₃)-, -CH(CF₃)-, - C(CF₃)₂-, -SCH₂CH₂-, -CH₂CH₂SCH₂CH₂-, -CH₂CH₂CH(CH₃)-, - Z'₁CH₂CH₂-, -O-CH₂(CH₂)₄CH-, -N=C(CH₃)-, -O-(CH₂)₆-, -CH₂Z'₁CH₂-, 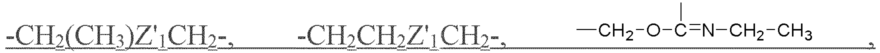 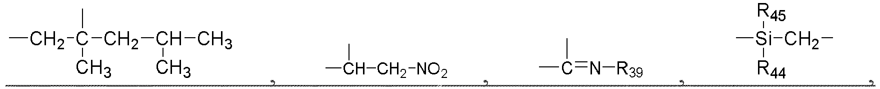 -Q-CH₂-CH₂-Q-CH₂-CH₂- 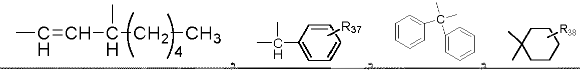 and the groups formed after C=O of any one of the aforementioned groups is replaced by C=S, and the groups formed after C-O of any one of the aforementioned groups is replaced by C-S; the carbonyl comprises -CO-, - CH₂CO-, -CH₂CH₂CO-, -CH₂CH₂CH₂CO-, -CH₂COCH₂-, - CH₂CH₂COCH₂-, -CH=CH-CO-, -OCH₂CH₂CH₂CO-, =N-CH₂-CO-, - Z'₁CH₂CO-, -Z'₁CH₂CH₂CO-, -Z'₁CH₂CH₂CH₂CO-, -CH₂(CH₂)₃CO-, - CH₂(CH₂)₆CO-, 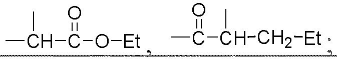 the ester groups comprise - COOCH₂-, -COOCH₂CH₂-, and -CH₂COOCH₃-; wherein Z'₁ in this paragraph is selected from the group consisting of -O-, -S-, -S-S-, 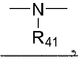 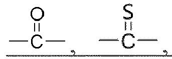 sulfonyl, sulfonimidyl or sulfonyloxy group, wherein R₄₁ is H, methyl, ethyl, propyl, isopropyl, butyl, ethoxyl or methoxyl, and any hydrogen atom H in R₄₁ may be substituted by F or Cl; R₄₄, R₄₅ are independently alkyl or ring; R₃₉ is selected from H, methyl, ethyl, propyl, butyl, pentyl, cyclopropyl, cyclopentyl, cyclohexyl, nitro, thiazole, - CH(CH₃)₂, -CH₂CH(CH₃)₂, -CH₂CH₂NO₃, 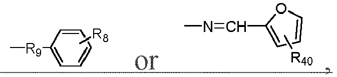 wherein R₈, R₃₇, R₃₈ and R₄₀ are independently nonexistent, a halogen atom, methyl, ethyl, propyl, butyl, fluoromethyl, fluoroethyl, methoxy, nitro, aldehyde group, ketone, ester, -CH₂-N(CH₃)₂ or -CH(CH₃)-Ph, R₉ is nonexistent or methylene ; R is a substituent, represents that any one H atom on the ring can be replaced by the substituent, the substituent can replace one H atom or replace two or more H atoms, and if two or more H atoms are replaced, the substituents may be the same or different. That is, each H can be replaced by a substituent defined by any one of R.

Preferably, in the general formula I, the unsaturated bond is a double bond; the two groups -SBF₃M in general formula I may be in an ortho-position, a meta-position, separated by 2 atoms or separated by more than two atoms.

Preferably in general formula I, the atom directly linked with the group -SBF₃M is carbon atom C; more preferably, among the two groups - SBF₃M in formula I, at least one group is linked to a carbon atom other than the carbonyl carbon comprising -C=O or -C=S.

Preferably, the carbon atom C linked with the group - SBF₃M includes a carbonyl carbon and a non-carbonyl carbon, wherein the carbonyl carbon comprises -C=O or -C=S, the non-carbonyl carbon has a structure without containing =O or =S on the carbon atom C.

Preferably, the H on any one carbon atom C in general formula I may be independently replaced by halogen, more preferably F, i.e., H on any carbon atom C in the ring, substituent, E₁, E₂ and the like may be substituted, thus in the definitions described hereinafter, some technical features will not be specified that the H on any one C is substituted by halogen.

Preferably, the substituent R is selected from H, halogen atoms, carbonyl, ester groups, aldehyde groups, ether oxygen groups, ether sulfur groups, =O, =S, 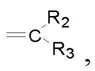 , nitro, cyano group, amino, amide, sulfonamido, sulfonyl alkane, sulfonic acid groups, hydrazino, diazo, alkyl, heteroalkyl, alkenyl, heteroalkenyl, alkynyl, heteroalkynyl, alkenyl-alkynyl, heteroalkenyl-alkyny, cyclic substituent, salt substituent, and groups formed by substituting any hydrogen atom H in the mentioned groups by a halogen atom; wherein the ester group comprises carboxylic ester, carbonic ester, sulfonic ester and phosphate, R₂ and R₃ are independently H, alkyl, heteroalkyl, alkenyl, heteroalkenyl, alkynyl, heteroalkynyl, alkenyl-alkynyl, heteroalkenyl-alkynyl, or a ring.

Preferably, any one structure of the heteroalkyl, heteroalkenyl, heteroalkynyl, and heteroalkenyl-alkynyl contains at least one of the non-carbon atoms selecting from halogen, S, N, O, P, or Si; the ring substituent comprises a three- to eight-membered ring and a multi-ring formed by at least two monocyclic rings; the salt substituents include, but are not limited to, sulfate (e.g., lithium sulfate, sodium sulfate, potassium sulfate), sulfonate (e.g., lithium sulfonate), sulfonamide (e.g., lithium sulfonimide), carbonate, carboxylate (e.g., lithium carboxylate, sodium carboxylate, potassium carboxylate), thioether salt (e.g., -SLi), oxyether salt (e.g., -OLi), ammonium salt (e.g., -NLi), hydrochloride, nitrate, azide salt, silicate, phosphate;

Preferably, the carbonyl is -R₁₀COR₁₁, the ester group is - R₁₂COOR₁₃, -R₁₂OCOR₁₇, -R₁₂SO₂OR₁₃, R₁₂O-CO-OR₁₃, or 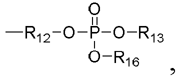 the ether oxygen group is -R₁₄OR₁₅, and the ether sulfur group is -R₁₄SR₁₅; the sulfonyl alkane is -R₁₈SO₂R₁₉, the amino is =N-R₂₀, 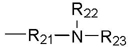 or -CH=N-R₂₄, the amide is 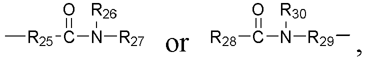 the sulfonamido is 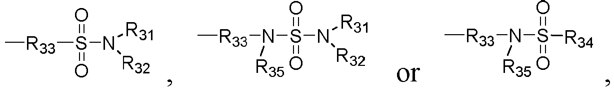 wherein R₂, R₃, R₁₀, R₁₁, R₁₂, R₁₃, R₁₄, R₁₅, R₁₆, R₁₇, R₁₈, R₁₉, R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ are independently alkyl, heteroalkyl, alkenyl, heteroalkenyl, alkynyl, heteroalkynyl or ring, the heteroalkyl, heteroalkenyl, heteroalkynyl or heteroalkenyl-alkynyl is an alkyl, an alkenyl, an alkynyl or an alkenyl-alkynyl with at least one of the heteroatom; and R₂, R₃, R₁₀, R₁₂, R₁₄, R₁₈, R₂₀, R₂₁, R₂₂, R₂₃, R₂₄, R₂₅, R₂₆, R₂₇, R₂₉, R₃₀, R₃₁, R₃₂, R₃₃, R₃₅ may independently be H or nonexistent; the group directly linked with N or O can also be metal ion, for example R₁₃, R₁₅, R₁₆, R₂₂, R₂₆, R₃₀, R₃₁, R₃₅ can also be metal ion, and the metal ion can be such as Li⁺, Na⁺, K⁺, Ca²⁺; the ring has a type consistent with the type defined by the ring substituent.

And optionally, the substituent further comprises a substituent in which any one C=O in any one of the groups is replaced by C=S, such as the groups in which C=O in carbonyl, ester group, aldehyde group and amide is replaced by C=S.

Preferably, the unsaturated heterocycle R' in general formula I is selected from

the following rings: furan, 3,4-dihydrofuran, 2,3-dihydrofuran, thiophene, 2,3-dihydrothiophene, 3,4-dihydrothiophene, pyrrole, 3,4-dihydropyrrole, 2,3-dihydropyrrole, imidazole, pyrazole, thiazole, oxazole, isoxazole, triazole, dihydrotriazole, thiadiazole, 1,3-dihydropyridine, 1,4-dihydropyridine, dihydropyrimidine, tetrahydropyrimidine, dihydropyrazine, dihydropyridazine, dihydrotriazine, pyran, dihydropyran, thiopyran, dihydrothiopyran 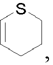 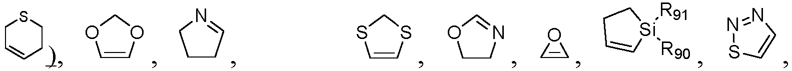 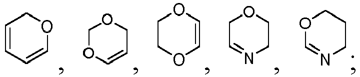 the substituent R connected to the is aforementioned heterocycle R'; two groups -SBF₃M are directly linked to any two or one atom of each of the heterocycle R', or indirectly linked to any two or one atom of each of the heterocycle R' via E1, E2, respectively.

Preferably, the general formula I includes, but is not limited to, the following compounds: 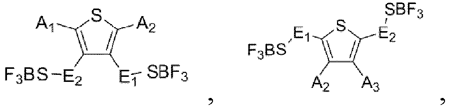 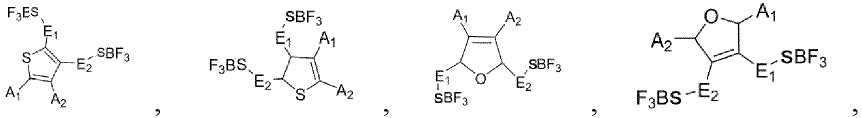 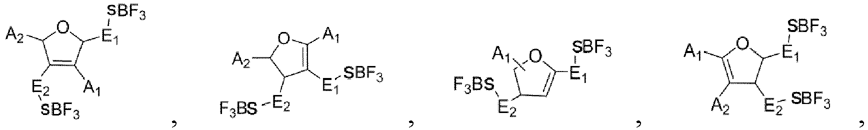 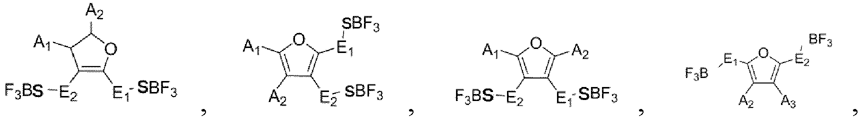 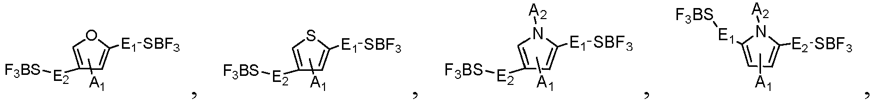 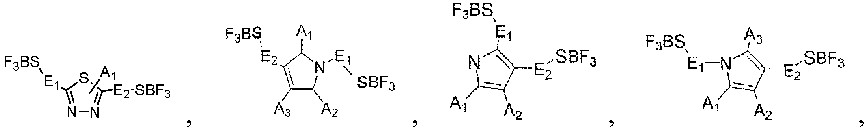 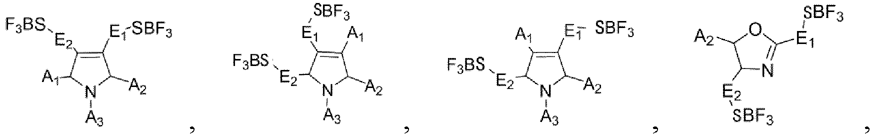 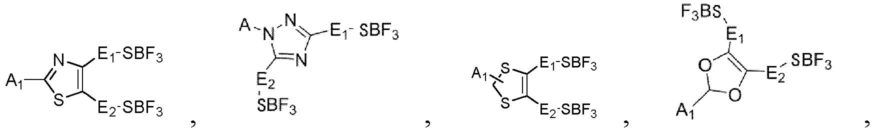 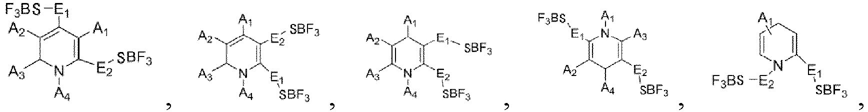 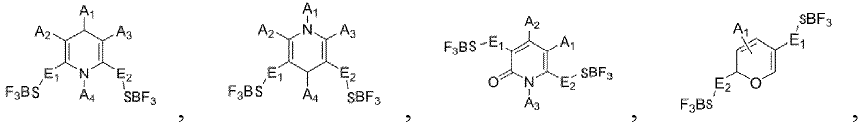 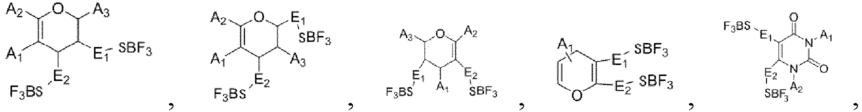 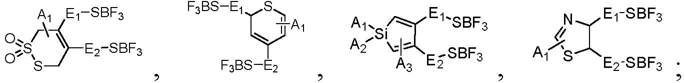 in the above structures, -SBF₃ refers to -SBF₃M; E₁ and E₂ in each cyclic structure are independently consistent with E₁ and E₂ defined by any one of the above paragraphs; any one H on each unsaturated heterocycle may be independently any one substituent selected from A₁, A₂, A₃ or A₄, the A₁, A₂, A₃ and A₄ are each independently selected from any one substituent defined by the substituent R according to any one of the above paragraphs.

Preferably, the halogen atom in the substituent R, A₁, A₂, A₃, or A₄ comprises F, Cl, Br, I; R₂, R₃, R₁₀, R₁₁, R₁₂, R₁₃, R₁₄, R₁₅, R₁₆, R₁₇, R₁₈, R₁₉, R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ are independently C₁₋₁₀ alkyl, C₁₋₁₀ heteroalkyl, C₁₋₁₀ alkenyl or C₁₋₁₀ heteroalkenyl, the heteroalkyl or heteroalkenyl is an alkyl or alkenyl having at least one heteroatom; R₂, R₃, R₁₀, R₁₂, R₁₄, R₁₈, R₂₀, R₂₁, R₂₂, R₂₃, R₂₄, R₂₅, R₂₆, R₂₇, R₂₉, R₃₀, R₃₁, R₃₂, R₃₃, R₃₅ may independently be H or nonexistent, and the group directly connected to N or O can also be a metal ion; for example, R₁₃, R₁₅, R₁₆, R₂₀, R₂₂, R₂₄, R₂₆, R₃₀, R₃₁, R₃₅ and the like can be lithium/sodium ion; the cyano group is selected from -CN, -CH₂CN, -SCH₂CH₂CN or -CH₂CH₂CN.

Preferably, the alkyl comprises methyl, ethyl, n-propyl, isopropyl, n-butyl, isobutyl, n-pentyl, isopentyl, sec-pentyl, neopentyl, hexyl, heptyl, octyl, nonyl, decyl, undecyl, dodecyl, tridecyl, tetradecyl or pentadecyl, for example, -C(CH₃)₃, -CH(CH₃)₂, -C(CH₃)₂CH₂C(CH₃)₃, - C(CH₃)₂CH₃ and the like fall into the alkyl category; the heteroalkyl comprises -CH₂NO₂, -CH₂Z₁CH₃, -CH₂CH₂Z₁, -Z₁(CH₂CH₃)₂, - CH₂N(CH₃)₂, -CH₂CH₂-O-NO₂, -CH₂S-S-CH₃, -CH₂Z₁CH(CH₃)₂, - COCH₂CH(CH₃)₂, -OCH₂(CH₂)₆CH₃, -CH₂(CH₃)Z₁CH₃, - CH₂(CH₃)Z₁CH₂CH₃, -CH₂CH₂Z₁CH₃, -CH₂CH(CH₃)Z₁CH₃, - CH(CH₃)CH₂Z₁CH₃, -CH₂CH₂Z₁CH₂CH₃, -CH₂CH₂CH₂Z₁CH₃, - CH₂CH₂CH₂Z₁CH₂CH₃, -CH₂CH(CH₃)CH₂Z₁CH₃, 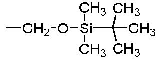 and the like; the alkenyl and heteroalkenyl groups are selected from ethenyl, propenyl, butenyl, pentenyl, hexenyl, heptenyl, octenyl, nonenyl, decenyl, hexadienyl, -C(CH₃)=CH₂, -CH₂CH=CH(CH₃)₂, -C(CH₃)=CH₂, - COCH₂CH(CH₃)₂, -CH=CHCOOCH₂CH₃, -CH₂CH=CHCH₂CH₃, - C(CH₃)₂CH=CH₂, -N=CHCH₃, -OCH₂CH=CH₂, -CH₂-CH=CH-Z₁CH₃, 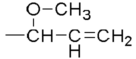 and the like; the alkynyl and heteroalkynyl are selected from ethynyl, propynyl, butynyl, pentynyl, hexynyl, heptynyl, - C≡CCH₂CH₂CH₂Z₁CH₂CH₃, -C≡CCH₂Z₁CH₂CH₃, -C≡C-Si(CH₃)₃ and the like.

Preferably, the cyclic substituent is selected from the group consisting of cyclopropylalkyl, oxirane, cyclobutylalkyl, cyclobutylheteroalkyl, cyclobutenyl, cyclobutylheteroalkenyl, phenyl, pyridine, pyrimidine, cyclopentanyl, cyclopentenyl, cyclopentadienyl, pyrrolyl, dihydropyrrolyl, tetrahydropyrrolyl, furanyl, dihydrofuran, tetrahydrofuran, thiophene, dihydrothiophene, tetrahydrothiophene, imidazolyl, thiazolyl, dihydrothiazolyl, isothiazolyl, dihydroisothiazolyl, pyrazolyl, oxazole, dihydrooxazolyl, tetrahydrooxazolyl, isoxazolyl, dihydroisoxazolyl, 1,3-dioxolane, triazolyl, cyclohexyl, cyclohexenyl, cyclohexadiene, piperidine, pyran, dihydropyran, tetrahydropyran, dihydrothiopyran ( 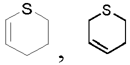 ), tetrahydrothiopyran, dithiane ( 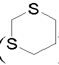 ), 1,2-dithiane ( 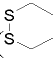 ), [1,3] oxazolidine ( 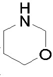 ), dioxane ( 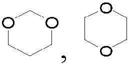 ), morpholine, piperazine, pyrone, pyridazine, pyrazine, triazine, dihydropyridine, tetrahydropyridine, dihydropyrimidine, tetrahydropyrimidine, hexahydropyrimidine, biphenyl, naphthyl, anthryl, phenanthryl, quinonyl, carbazolyl, indolyl, isoindolyl, quinolyl, purinyl, basilyl, benzoxazole, p-diazebenzene, pyrenyl, acenaphthyl,

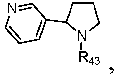

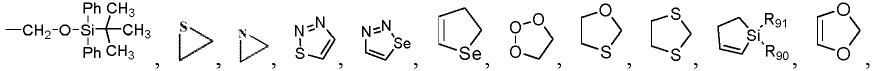

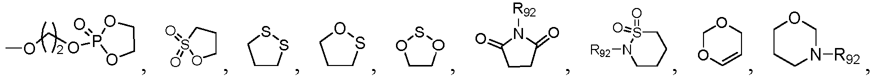

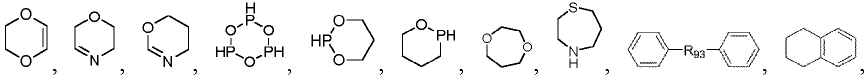

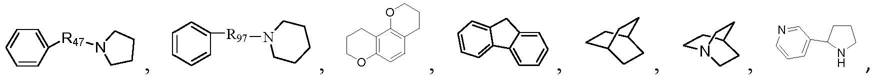

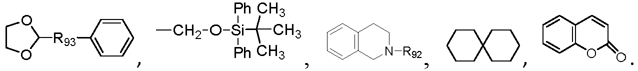

Wherein Z₁ is selected from -O-, -S-, -S-S-, -CO-, 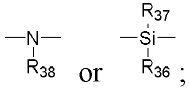 R₃₆, R₃₇, R₃₈, R₄₃, R₉₀, R₉₁, R₉₂ are independently selected from H, methyl, ethyl, propyl, isopropyl, butyl, fluoromethyl, fluoroethyl, methoxyl, vinyl, propenyl, or metal ions; R₄₇, R₉₃ and R₉₇ are independently selected from 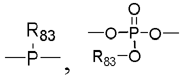 or are any one of the linking groups, and R₈₃ is selected from hydrocarbyl, heterohydrocarbyl, cyclic or metal cation;

Preferably, the substituent R is selected from the group consisting of H, halogen atoms, -R₁₂COOR₁₃, -R₁₂OCOR₁₃, -R₁₂SO₂OR₁₃, R₁₂O-CO-OR₁₃, aldehyde group, -R₁₄OR₁₅, -R₁₆SR₁₇, =O, =S, =CH₂, nitro, -CN, -CH₂CN, -CH₂CH₂CN, 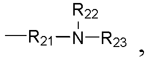 -CH=N-R₂₄, 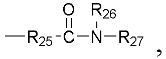 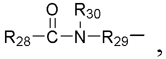 -R₁₈SO₂R₁₉, sulfate, sulfonate, sulfonimide, carbonate, carboxylate, methyl, ethyl, n-propyl, isopropyl, n-butyl, isobutyl, n-pentyl, isopentyl, sec-pentyl, neopentyl, n-hexyl, isohexyl, sec-hexyl, neohexyl, heptyl, octyl, nonyl, vinyl, propenyl, butenyl, pentenyl, hexenyl, hexadienyl, ethynyl, propynyl, butynyl, -C(CH₃)₂CH₂C(CH₃)₃, - C(CH₃)₂CH₂CH₃, -C≡C-Si(CH₃)₃, halogenated alkyl, halogenated heteroalkyl, 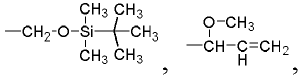 and cyclic substituent.

Wherein R₁₀, R₁₁, R₁₂, R₁₃, R₁₄, R₁₅, R₁₆, R₁₇, R₁₈, R₁₉, R₂₁, R₂₂, R₂₃, R₂₄, R₂₅, R₂₆, R₂₇, R₂₈, R₂₉, R₃₀, R₃₁, R₃₂ are independently methyl, ethyl, n-propyl, isopropyl, n-butyl, isobutyl, n-pentyl, isopentyl, sec-pentyl, neopentyl, trifluoromethyl, alkenyl, and R₁₀, R₁₂, R₁₄, R₁₆, R₁₈, R₂₁, R₂₂, R₂₃, R₂₄, R₂₅, R₂₆, R₂₇, R₂₉, R₃₀ may be independently H or nonexistent; the halogenated alkyl and halogenated heteroalkyl include the groups formed after any H in the alkyl and alkoxyl is substituted by halogen.

The cyclic substituent is selected from the group consisting of cyclopropane, oxirane, phenyl, pyridine, pyrimidine, cyclopentyl, cyclopentenyl, cyclopentadienyl, pyrrolyl, furanyl, thiophene, imidazolyl, thiazolyl, oxazole, dihydrooxazolyl, 1,3-dioxolane, cyclohexane, cyclohexenyl, cyclohexadiene, piperidine, pyran, dihydropyran, tetrahydropyran, biphenyl, naphthyl, indolyl, benzoxazole, 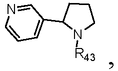 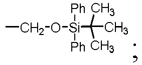 wherein any one ring of the cyclic substituent can be linked with a substituted unsaturated heterocycle through -CH₂-, -CH₂CH₂-, - CH₂CH₂CH₂-, -COO-, -CO-, -SO₂-, -N=N-, -O-, -OCH₂-, -OCH₂CH₂-, - CH₂OCH₂-, -COCH₂-, -S-, -S-S-, -CH₂OOC or a single bond; R₄₃ is selected from H, methyl, ethyl or propyl.

The first substituent is preferably H, a halogen atom, methyl, ethyl, propyl, isopropyl, butyl, pentyl, fluoromethyl, fluoroethyl, methoxyl, ethoxy, nitro, vinyl, ethynyl, cyano group, aldehyde group, -SCH₃, - COOCH₃, -COOCH₂CH₃, -OCF₃, =O, -N(CH₃)₂, -CON(CH₃)₂, -SO₂CH₃.

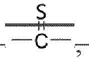

Another inventive concept of the present disclosure is to provide a method of preparing the electrolyte according to any one of the preceding paragraphs comprising the step of reacting an unsaturated heterocyclic sulfur-based binary structure containing two groups -SH, a boron trifluoride-based compound and an M source to obtain a product, namely an unsaturated heterocyclic sulfur-based boron trifluoride salt containing two groups -SBF₃M.

A further inventive concept of the present disclosure is to provide a use of the sulfur-based boron trifluoride salt containing an unsaturated heterocycle according to any one of the above paragraphs in a secondary lithium battery, wherein the use is as follows: the boron trifluoride salt represented by general formula I can be used as salt and also as an additive, and a polymerizable monomer can also be used as a single-ion conductor polymer electrolyte and a polymer skeleton after polymerization.

In another inventive concept, the present disclosure provides an additive used in a battery, the additive comprises a sulfur-based boron trifluoride salt containing an unsaturated heterocycle according to any one of the above general formulas, i.e., general formula I.

In another inventive concept, the present disclosure provides salt used in a battery, the salt is the salt in an electrolyte, wherein the salt comprises a sulfur-based boron trifluoride salt containing an unsaturated heterocycle according to any one of the above general formulas, i.e., general formula I.

In another inventive concept, the present disclosure provides a polymer used in a polymer electrolyte, the polymer is formed by polymerizing the sulfur-based boron trifluoride salt containing an unsaturated heterocycle represented by general formula I according to any one of the above paragraphs, which is used as a single-ion conductor polymer electrolyte and a polymer skeleton in a battery after polymerization.

In another inventive concept, the present disclosure provides an electrolyte comprising a liquid-state electrolyte, a gel electrolyte, a solid-liquid hybrid electrolyte, a quasi-solid-state electrolyte, or an all-solid-state electrolyte; the electrolytes comprise the sulfur-based boron trifluoride salt containing an unsaturated heterocycle according to any one of the above paragraphs.

In another inventive concept, the present disclosure provides a battery comprising a liquid-state battery, a solid-liquid hybrid battery, a semi-solid-state battery, a gel battery, a quasi-solid-state battery and an all-solid-state battery; the battery comprises the sulfur-based boron trifluoride salt electrolyte containing an unsaturated heterocycle according to any one of the above paragraphs, and an anode, a cathode, a separator and an encapsulation shell; wherein each of the liquid-state electrolyte, the gel electrolyte, the solid-liquid hybrid electrolyte, the quasi-solid-state electrolyte or an all-solid-state electrolyte can be used in the liquid-state battery, the solid-liquid hybrid battery, the semi-solid-state battery, the gel battery, the quasi-solid-state battery or the all-solid-state battery.

A final inventive concept of the present disclosure is to provide a battery pack including the battery.

The favorable effects of the present disclosure are as follows:

The electrolyte of the present disclosure inventively involves two -SBF₃M groups -SBF₃M in an unsaturated heterocycle, preferably the -SBF₃M is connected to a carbon atom C, and the S is an atom that is not on the ring. The sulfur-based boron trifluoride salt electrolyte containing an unsaturated heterocycle, can be used as an additive in the electrolyte, it can form a stable and dense passivation membrane on the electrode surface of the battery, can hinder the direct contact of the electrolyte with the electrode active materials, can inhibit decomposition of the components of the electrolyte; and can expand the electrochemical window of the entire electrolyte system, thereby significantly improving the cycle performance, the discharge specific capacity and the coulombic efficiency of the battery. In addition, the sulfur-based boron trifluoride salt containing an unsaturated heterocycle, which is a metal ion conductor per se, when the boron trifluoride salt is used as an additive, it consumes less metal ions escaped from the anode while forming a stable passivation layer on the electrode surface, and can significantly improve the first coulombic efficiency and the first cycle discharge specific capacity of the battery. The electrochemical performance of the cell can be improved when the electrolyte containing the sulfur-based boron trifluoride salt is assembled with the anode material of conventional high-voltage high-specific capacity and with cathode material of low-voltage high-specific capacity to form a secondary battery. In addition, the structure of the present disclosure can also be used in a mixed manner with the conventional additives, i.e., form a dual additive or a multi-additive, the battery using the dual additive or multi-additive shows superior electrochemical performance.

More importantly, the sulfur-based boron trifluoride salt containing an unsaturated heterocycle and two -SBF₃M groups in the present disclosure can be used as salt in the electrolyte (including a liquid-state electrolyte, a solid-liquid hybrid electrolyte and an all-solid-state electrolyte); when the salt of the present disclosure is dissolved in a nonaqueous solvent, the ions can be easily solvated, and provide the battery with higher ionic conductivity, and have the advantages such as without corrosion to the current collector and can withstand a high voltage, and the polymers with narrow electrochemical window (e.g., PEO) are matched with the high voltage (> 3.9V) anodes, thereby significantly improving the electrochemical performance of the battery. Moreover, the salt of the present disclosure can be used in combination with conventional salts as double salts or multiple salts, the effects are also desirable. Furthermore, the electrolyte when acted as an additive and as salt, can work synergeticly, so that the battery has an excellent and superior effects over the conventional additives or salt. For example, when the boron trifluoride is used as salt, it not only has excellent ionic conductivity, but also can form a stable passivation layer on the electrode surface during the cycle process of the battery. It prevents further decomposition of the polymer (e.g. PEO) or the other components with a narrow electrochemical window, thus the battery exhibits superior long cycle stability.

Furthermore, the structure of the present disclosure comprises polymerizable functional groups (e.g., cyclic ether, cyclic carbonate, and other groups) which can be used as a monomer for a single-ion conductor polymer electrolyte, and can be applied as a single-ion conductor polymer electrolyte after polymerization, and the battery exhibits excellent cycle performance when the polymer is used as a single-ion conductor polymer electrolyte. The polymerizable functional groups can be subjected to non-in-situ polymerization to form a single-ion conductor which is assembled into a battery for use, or can be subjected to in-situ polymerization to form a quasi-solid-state battery or an all-solid-state battery for use. In the present invention, the polymer electrolyte formed by the polymerizable monomer still exhibits excellent effect under the circumstance without adding salt (e.g., lithium/sodium salt); after the conventional salt is further added, the battery shows more excellent electrochemical performance due to the increased number of dissociated ions. Therefore, during the use of the boron trifluoride salt containing two -SBF₃M groups in the present application, its properties as salt per se and its polymerizable monomer properties as a polymer electrolyte can produce an excellent synergistic effect. That is, the multiple effects of the boron trifluoride per se can generate synergy, which has desirable effects and important significance.

In addition, the raw materials for preparing the sulfur-based boron trifluoride salt in the present application have abundant resources, the raw materials have wide selectivity and low costs, and the preparation process is very simple, only the compounds containing two groups -SH are required to react with the boron trifluoride organic substance and the M source (M is metal cation), the reaction is simple with mild conditions, thus the sulfur-based boron trifluoride has an optimal prospect of industrial application.

In addition, the invention also uses different metals other than conventional lithium, such as sodium and potassium, to form salts that offer more possibilities for later use, cost control, or raw material selection.

As a result, the sulfur-based boron trifluoride salt electrolyte containing unsaturated heterocycle provided by the present disclosure can be used in a liquid-state battery, a solid-liquid hybrid battery, and an all-solid-state battery, can improve the electrochemical performance of the battery, including improving the energy density of the battery, enhancing the cycle stability, extending the service life of the battery; moreover, the synthesis process is simple, the raw material price is low, and the economic benefit is good.

### DESCRIPTION OF THE PREFERRED EMBODIMENT

FIGS. 1-11 are nuclear magnetic hydrogen spectrograms of products shown in Examples 1-11 of the present disclosure, respectively;
FIG. 12 is a nuclear magnetic carbon spectrogram of the product shown in Example 12 of the present disclosure;
FIGS. 13-15 are nuclear magnetic hydrogen spectrograms of products shown in Examples 13-15 of the present disclosure, respectively;
FIGS. 16-19 are graphs showing the cycle effects of batteries prepared with the Examples 2/4/10/15 of the present disclosure as the additives in a liquid-state electrolyte respectively;
FIGS. 20-21 are graphs showing the cycle effects of batteries 7/11 prepared with the Examples 7/11 of the present disclosure as the salts in a liquid-state electrolyte respectively;
FIG. 22 illustrates a graph showing the cycle effects of the battery prepared with the Example 8 of the present disclosure as the salt in a solid-state electrolyte;
FIG. 23 illustrates a graph showing the effects of a battery prepared with a polymer electrolyte after polymerization of the monomer in Example 13 of the present disclosure.

### DESCRIPTION OF THE PREFERRED EMBODIMENT

For the sake of clearly indicating the purposes, technical solutions and advantages of the examples of the present invention, the technical solutions of the present invention will be expressly and completely described below with reference to the preferred embodiments of the invention; it is obvious that the examples described herein are merely a portion of examples in the invention, instead of all the examples. Based on the examples of the invention, all the other examples derived by the ordinary skilled person in the art under the premise without paying a creative labor fall into the protection scopes of the invention.

In the present disclosure, if the connection position of a substituent and a substituted structure is not explicitly indicated, it is meant that any atom of the substituent may be linked with the substituted atom or structure, e.g., if the substituent is 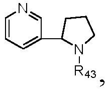 any atom of any one benzene ring or any atom of the group R₄₃ may be linked with the substituted structure. Furthermore, if a substituent contains two linking bonds, the substituted structure may be connected with any of the linking bonds, e.g. 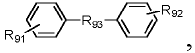 if R₉₃ is "-OCH₂CH₂-", the linking bond on the oxygen atom O may be linked to both the left benzene ring and the right benzene ring, for the same reason, so is the linking bond on the methylene group.

In the present disclosure, if a group needs to be connected with two substructures, thus the group has two linking bonds or radicals to be connected; if it is not specified which two atoms are linking with the part to be connected, any atom containing H can be used for the connection. For example, if the group E1 in the claims of the present disclosure is n-butyl, since the group E1 has two linking bonds to be connected (one bond to be connected with -SBF₃M, and the other bond to be connected with the main structure), while n-butyl has only one linking bond at the end, the other linking bond can be located on any one of the four carbon atoms in n-butyl.

In the present disclosure, if a chemical bond is not painted on an atom, but is illustrated at a position that intersects the bond, such as 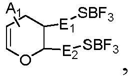 indicating that any one H on the ring may be replaced by the substituent A1, either one H atom may be replaced, or two or more H atoms may be replaced, the substituents may be the same or different. If more than one hydrogen atom is present in an atom (or other heteroatoms) on the ring, or a plurality of bonds are to be connected, a plurality of the same or different substituents may be linked with the atom simultaneously, and each of the substituents to be connected is selected from the substituent A1. For instance, if the substituent A1 is methyl, F, or =O, then the aforementioned general formula may be 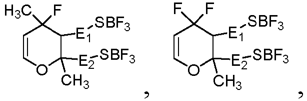 or 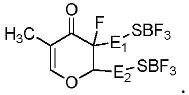 Furthermore, if the substituent on the ring is denoted by the symbol A or R, for example, 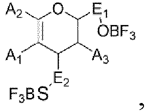 if two H atoms are present in C linked to the substituent A1, both of the two H atoms may be replaced by the substituent, or only one H atom may be replaced by the substituent, the substituents on two H atoms may be the same or different, for instance, both of the H atoms may be replaced by methyl, or one H atom is replaced by methyl and another H atom is replaced by ethyl. Moreover, the substituents may also be linked to the ring via a double bond, as illustrated in the example in the preceding paragraph.

The "Et" denotes an ethyl. The "Ph" denotes a phenyl.

In the structural formula of the present disclosure, if an atom is followed by a group in parenthesis "( )", it means that the group in parenthesis is connected with the preceding atom. For example, -C(CH₃)₂-refers to 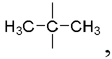 -CH(CH₃)- refers to

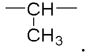

In the present disclosure, for the group xx, there may be one, or two or three linking bonds, connected to the substituted structure, depending on the actual need. For example, if the substituent is an ordinary substituent, there is only one linking bond, if the groups are E₁, E₂, E₃, or some groups R in second substituent, there are two or three linking bonds.

In the claims and description of the present disclosure, the M in a group -SBF₃M may be a monovalent, bivalent, trivalent or polyvalent metal cation, if M is not a mono-valent ion, the number of - SBF₃ shall be increased accordingly so as to match exactly with the valence number of M.

The "boron trifluoride-based compound" refers to boron trifluoride, a boron trifluoride-containing compound, or a boron trifluoride complex and the like.

The inventive concept of the present disclosure is to provide a binary sulfur-based boron trifluoride salt that can be used as an electrolyte additive, an electrolyte salt and a polymerizable monomer, i.e., the boron trifluoride salt comprises two groups -NBF₃M, wherein M is Li⁺, Na⁺, etc. The binary boron trifluoride salt can be used in a liquid-state battery, a solid-liquid hybrid battery, a semi-solid-state battery, a gel battery, a quasi-solid-state battery and an all-solid-state battery. The method of preparing the compounds is simple and smart and has a high yield. Namely, the compounds are obtained by reacting the raw materials, boron trifluoride-based compounds and the M-source, specifically the group -SH in the raw materials participates the reaction, and other structures do not participate the reaction. The specific method mainly comprises two kinds:
1. The M-source and the raw materials were added into a solvent and blended under the nitrogen/argon atmosphere, the reaction was performed at 5-50°C for 5-24 hours, and the mixed solution was subjected to drying under reduced pressure at 20-80°C under the vacuum degree condition of about -0.1 MPa to remove the solvent to obtain an intermediate; the boron trifluoride-based compound was then added, and the reaction was performed while stirring at 5-50°C for 6-24 hours; the mixed solution was subjected to drying under reduced pressure at 20-80°C under the vacuum degree condition of about -0.1 MPa to remove the solvent to obtain a crude product. The crude product was washed, filtered and dried to obtain the final product binary organic boron trifluoride salt with a yield of 74-95%.
2. The raw materials and boron trifluoride-based compound were added into a solvent and blended uniformly under the nitrogen/argon atmosphere, the reaction was performed at 5-50°C for 6-24 hours, the mixed solution was subjected to drying under reduced pressure at 20-80°C under the vacuum degree condition of about -0.1 MPa to remove the solvent to obtain an intermediate; the M-source was then added, and the solvent containing M-source was added into the intermediate, the reaction was performed while stirring at 5-50°C for 5-24 hours to obtain a crude product; the crude product was directly washed or washed after drying under reduced pressure, then filtered and dried to obtain the final product binary organic boron trifluoride salt with a yield of 74-95%.

In the two specific methods mentioned above, the boron trifluoride-based compound may include boron trifluoride diethyl ether complex, boron trifluoride tetrahydrofurane complex, boron trifluoride butyl ether complex, boron trifluoride acetic acid complex, boron trifluoride mono-ethylamine complex, boron trifluoride phosphoric acid complex, etc. The M-source includes metal lithium/sodium flake, lithium/sodium methanoxide, lithium/sodium hydroxide, lithium/sodium ethoxide, butyl lithium/sodium, lithium/sodium acetate, etc. Each of the solvents is independently alcohol (the raw material of some liquid alcohols may also act as the solvent), ethyl acetate, DMF (dimethyl formamide), acetone, hexane, dichloromethane, tetrahydrofuran, ethylene glycol dimethyl ether, etc. The washing may be performed with a weak polar solvent, such as diethyl ether, n-butyl ether, isopropyl ether, n-hexane, cyclohexane, diphenyl ether, etc.

### Example 1

### Raw material

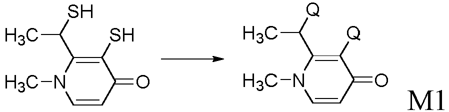

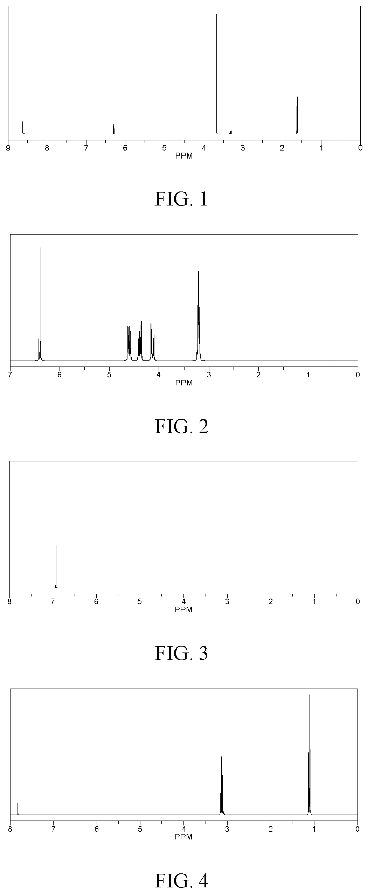

Method: 0.01mol of the raw material and boron trifluoride tetrahydrofuran complex (2.8g, 0.02mol) were mixed uniformly in 15mL of glycol dimethyl ether under nitrogen atmosphere, and reacted at room temperature for 12 hours. The resulting mixed solution was dried under reduced pressure at 40°C under the vacuum degree of about -0.1 MPa to remove the solvent, an intermediate was obtained. Lithium ethoxide (1.04g, 0.02mol) was dissolved in 10mL of ethanol and slowly added to the intermediate, subsequently stirred and reacted at room temperature for 8 hours, and the resulting mixed solution was dried under reduced pressure at 40°C under the vacuum degree of about -0.1MPa, the obtained solid was washed with n-butyl ether for three times, then filtered and dried to prepare the product M1, Q was -S-BF₃Li. The yield of product M1 was 77%, and the nuclear magnetic was shown in FIG. 1.

### Example 2

### Raw material

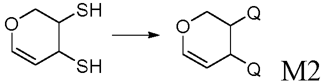

Method: 0.01mol of the raw material and boron trifluoride diethyl ether complex (2.98g, 0.021mol) were mixed uniformly in 15mL of THF (tetrahydrofuran) under argon atmosphere, and reacted at room temperature for 12 hours. The resulting mixed solution was dried under reduced pressure at 30°C under the vacuum degree of about -0.1 MPa to remove the solvent, and an intermediate was obtained. 14mL of the hexane solution of butyl lithium (c=1.6mol/L) was added to the intermediate, subsequently stirred and reacted at room temperature for 6 hours, the resulting mixed solution was dried under reduced pressure at 40°C under the vacuum degree of about -0.1 MPa, the obtained crude product was washed with cyclohexane for three times, filtered and dried to prepare the product M2, Q was -S-BF₃Li. The yield of product M2 was 85%, and the nuclear magnetic hydrogen spectrogram was shown in FIG.2.

### Example 3

### Raw material

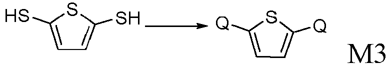

Method: 0.01mol of the raw material and lithium methoxide (0.76g, 0.02mol) were taken under a nitrogen atmosphere, and mixed uniformly with 20mL of methanol and reacted at room temperature for 18 hours. The resulting mixed solution was dried under reduced pressure at 40°C under the vacuum degree of about -0.1 MPa to remove the solvent, an intermediate was obtained. Boron trifluoride tetrahydrofuran complex (3.07g, 0.022mol) was added to the intermediate, stirred and reacted under room temperature for 12 hours, and the resulting mixed solution was dried under reduced pressure at 40°C under the vacuum degree of about -0.1 MPa, the obtained solid was washed with isopropyl ether for three times, then filtered and dried to prepare the product M3, Q was -S-BF₃Li. The yield of product M3 was 84%, and the nuclear magnetic hydrogen spectrogram was shown in FIG. 3.

### Example 4

### Raw material

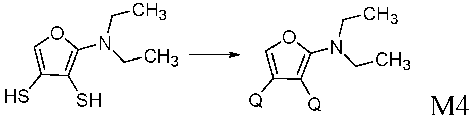

Method: 0.01mol of the raw material and boron trifluoride tetrahydrofuran complex (3.07g, 0.022mol) were mixed uniformly in 15mL of THF (tetrahydrofuran) under an argon atmosphere, and reacted at room temperature for 12 hours. The resulting mixed solution was dried under reduced pressure at 30°C under the vacuum degree of about -0.1 MPa to remove the solvent, an intermediate was obtained. 14ml of the hexane solution of butyl lithium (c=1.6mol/L) was added to the intermediate, subsequently stirred and reacted at room temperature for 6 hours, and the resulting mixed solution was dried under reduced pressure at 35°C under the vacuum degree of about -0.1MPa, the obtained crude product was washed with n-hexane for three times, then filtered and dried to prepare the product M4, Q was -S-BF₃Li. The yield of product M4 was 84%, and the nuclear magnetic hydrogen spectrogram was shown in FIG.4.

### Example 5

### Raw material

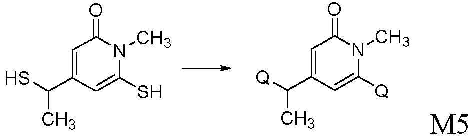

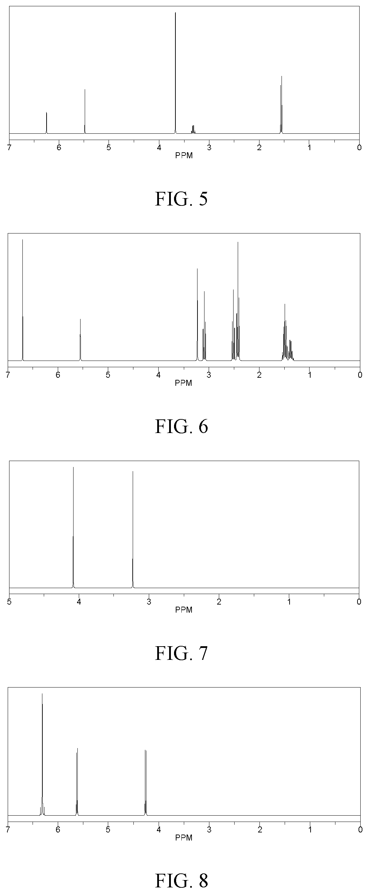

Method: 0.01mol of the raw material and boron trifluoride acetic acid complex (3.83g, 0.0204mol) were mixed uniformly in 15mL of THF (tetrahydrofuran) under argon atmosphere, and reacted at 40°C for 12 hours. The resulting mixed solution was dried under reduced pressure at 40°C under the vacuum degree of about -0.1 MPa to remove the solvent, an intermediate was obtained. Sodium acetate (1.64g, 0.0204mol) was dissolved in 10mL of DMF and added to the intermediate, subsequently stirred and reacted at 45°C for 8 hours, and the resulting mixed solution was dried under reduced pressure at 80°C under the vacuum degree of about -0.1MPa, the obtained solid was washed with diphenyl ether for three times, then filtered and dried to prepare the product M5, Q was -S-BF₃Na. The yield of product M5 was 80%, and the nuclear magnetic hydrogen spectrogram was shown in FIG.5.

### Example 6

### Raw material

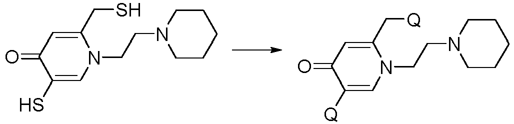

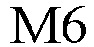

Method: the product M6 was prepared with the raw material with the method of Example 3, Q was -S-BF₃Li. The yield was 85%, and the nuclear magnetic hydrogen spectrogram was shown in FIG.6.

### Example 7:

### Raw material

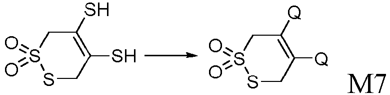

Method: the product M7 was prepared with the raw material with the method of Example 1, Q was -S-BF₃Li. The yield was 79%, and the nuclear magnetic hydrogen spectrogram was shown in FIG.7.

### Example 8

### Raw material

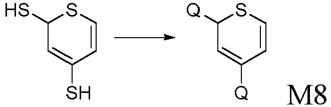

Method: the product M8 was prepared with the raw material with the method of Example 2, Q was -S-BF₃Li. The yield was 82%, and the nuclear magnetic hydrogen spectrogram was shown in FIG.8.

### Example 9

### Raw material

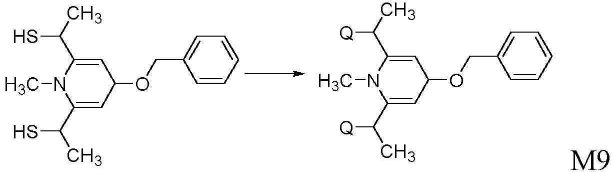

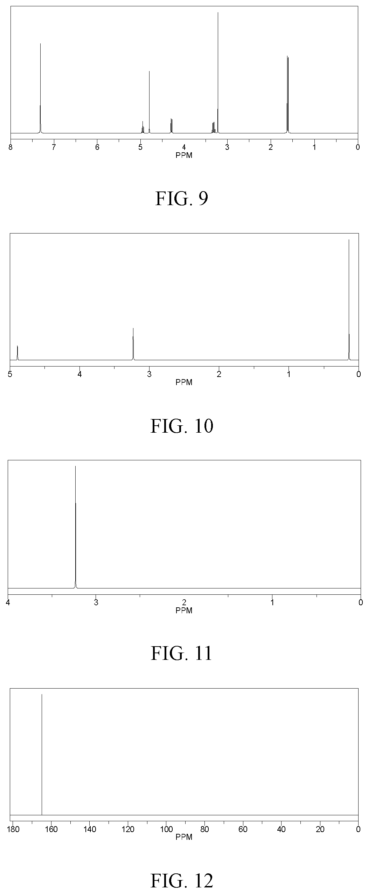

Method: the product M9 was prepared with the raw material with the method of Example 4, Q was -S-BF₃Li. The yield was 84%, and the nuclear magnetic hydrogen spectrogram was shown in FIG.9.

### Example 10

### Raw material

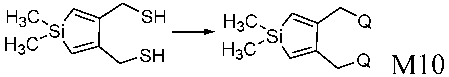

Method: the product M10 was prepared with the raw material with the method of Example 3, Q was -S-BF₃Li. The yield was 81%, and the nuclear magnetic hydrogen spectrogram was shown in FIG.10.

### Example 11

### Raw material

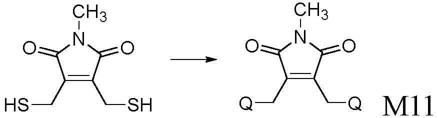

Method: the product M11 was prepared with the raw material with the method of Example 2, Q is-S-BF₃Li. The yield was 86%, and the nuclear magnetic hydrogen spectrogram was shown in FIG.11.

### Example 12

### Raw material

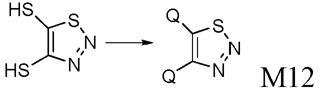

Method: the product M12 was prepared with the raw material with the method of Example 1, Q was -S-BF₃Li. The yield was 85%, and the nuclear magnetic hydrogen spectrogram was shown in FIG.12.

### Example 13

### Raw material

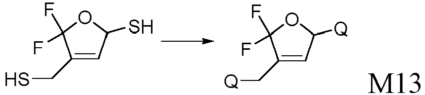

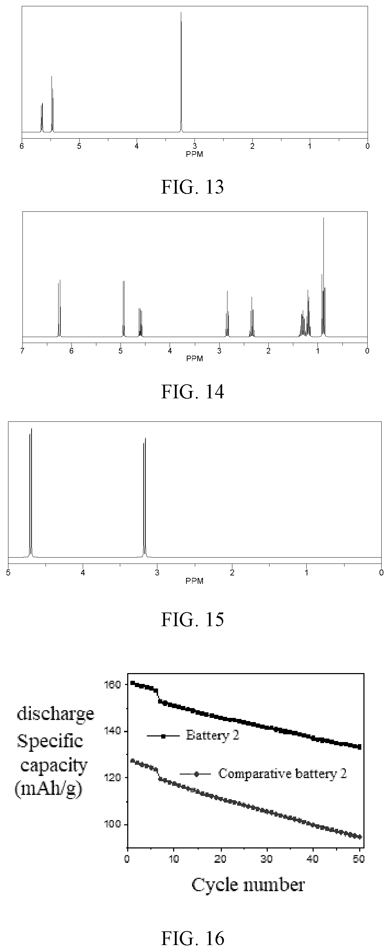

Method: the product M13 was prepared with the raw material with the method of Example 2, Q was -S-BF₃Li. The yield was 87%, and the nuclear magnetic hydrogen spectrogram was shown in FIG.13.

### Example 14

### Raw material

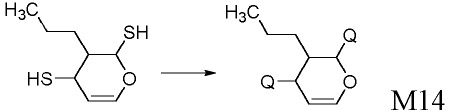

Method: the product M14 was prepared with the raw material with the method of Example 1, Q was -S-BF₃Li. The yield was 79%, and the nuclear magnetic hydrogen spectrogram was shown in FIG.14.

### Example 15

### Raw material

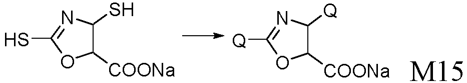

Method: the product M15 was prepared with the raw material with the method of Example 3, Q was -S-BF₃Li. The yield was 88%, and the nuclear magnetic hydrogen spectrogram was shown in FIG.15.

### Example 16

The boron trifluoride salt containing an unsaturated heterocycle claimed by the present disclosure mainly performed functions in three aspects as follows: 1. It was used as an additive in the electrolyte (including the liquid-state electrolyte and the solid-state electrolyte), it mainly served to generate a passivation layer, and because the salt per se can dissociate ions and played the role of supplementing the consumed ions, so that the first cycle efficiency, first cycle discharge specific capacity, long cycle stability, rate performance of the battery were greatly improved. 2. It was used as salt in the electrolyte (including the liquid-state electrolyte and the solid-state electrolyte), and mainly performed the functions of providing ion transmission and passivating the electrode, it produced desirable effects when used either alone or in combination with the conventional salt to form a double salt. 3. The polymerizable monomer can be further used as a single-ion conductor polymer electrolyte after polymerization, when the polymer was used as a single-ion conductor polymer electrolyte, the battery showed very excellent cycle performance. The properties of the present disclosure were described in a testing manner as follows.

### I. As a liquid-state electrolyte additive

### (1) Positive electrode

The positive electrode primary material active substance, the electron conductive additive, and the binder were added to the solvent according to a mass ratio of 95:2:3, the solvent occupied 65% by mass of the total slurry, and the materials were mixed and stirred uniformly to obtain a positive electrode slurry having a certain fluidity; the positive electrode slurry was coated on the aluminum foil, then baked, compacted and cut to obtain the usable positive electrode. The active materials were selected from the group consisting of lithium cobalt oxide (LiCoO₂, abbreviated as LCO), lithium nickel cobalt manganese oxide (NCM811 was selected), lithium nickel cobalt aluminate (LiNi_{0.8}Co_{0.15}Al_{0.05}O₂, abbreviated as NCA), lithium nickel manganese oxide (LiNi_{0.5}Mn_{1.5}O₄, abbreviated as LNMO), Na_{0.9}Cu_{0.22}Fe_{0.3}Mn_{0.48}]O₂ (abbreviated as NCFMO), the electron conductive additives was selected from the group consisting of Carbon Nanotubes (CNT) and Super P, the binder was polyvinylidene fluoride (PVDF), and the solvent was N-methyl pyrrolidone (NMP).

### (2) Negative electrode

The negative electrode primary material active substance (excluding metal Li), the electron conductive additive, and the binder were added to the solvent deionized water according to the mass ratio of 95:2.5:2.5, the solvent occupied 42% of the total slurry, the materials were mixed and stirred uniformly to obtain a negative electrode slurry with a certain fluidity; the negative electrode slurry was coated on the copper foil, then baked and compacted to obtain the usable negative electrode. The active materials herein were selected from graphite (C), silicon carbon (SiOC450), metal lithium (Li), and soft carbon (SC), the electron conductive additive was CNT and Super P, the binder was carboxymethyl cellulose (CMC) and styrene-butadiene rubber (SBR).

The positive and negative electrode systems selected for use in the present invention were shown in Table 1:

**Table 1. Positive and negative electrode system**

| The positive and negative electrode system of the battery | The main material of a positive electrode | The main material of a negative electrode |
|---|---|---|
| A1 | LCO | SiOC450 |
| A2 | NCM811 | SiOC450 |
| A3 | NCM811 | Li |
| A4 | NCA | C |
| A5 | LNMO | C |
| A6 | LCO | Li |
| A7 | NCFMO | SC |

### (3) Preparation of the liquid-state electrolyte

The series of electrolytes E1-E15 were obtained by uniformly mixing M1-M15, an organic solvent, conventional salts and conventional additives, wherein the used solvent was ethyl methyl carbonate (EMC), dimethyl carbonate (DMC), diethyl carbonate (DEC), ethylene carbonate (EC) and propylene carbonate (PC). The conventional additives were fluoroethylene carbonate (FEC), vinylene carbonate (VC), trimethyl phosphate (TMP), ethoxypentafluorocyclotriphosphazene (PFPN), vinyl sulfate (DTD); conventional salts were lithium bis (oxalato) borate (LiBOB), lithium difluoro (oxalato) borate (LiODFB), lithium bis (fluorosulfonylimide) (LiFSI), lithium hexafluorophosphate (LiPF₆), lithium bis (trifluoromethyl) sulfonylimide (LiTFSI), sodium hexafluorophosphate (NaPF₆). The specific components, ratios and other parameters were shown in Table 2.

**Table 2. The liquid-state electrolyte prepared by using the structure of the present application as an additive**

| Liquid-state electrolyt es | Solvents and percentages (volume ratio) | Salt and concentrati on | Conventional additives and percentages (mass ratio in the salt) | Use of the structure M in Examples as an additive and percentages (mass ratio in the salt) |
|---|---|---|---|---|
| E1 | 30%EC+70%E MC | 1M LiPF₆ | / | 2% M1 |
| E2 | 30%EC+70%E MC | 1M LiPF₆ | / | 2% M2 |
| E3 | 30%EC+70%E MC | 1M LiPF₆ | 1%FEC | 1% M3 |
| E4 | 30%EC+70%E MC | 1M LiPF₆ | 0.5%FEC+0.3% DTD+0.2%TM P | 1% M4 |
| E5 | 50%EC+50%D MC | 1M NaPF₆ | / | 2% M5 |
| E6 | 30%EC+70%E MC | 1M LiPF₆ | / | 2% M6 |
| E7 | 50%EC+50%D MC | 1M LiODFB | 1%VC | 0.5% M7 |
| E8 | 50%EC+50%D MC | 1M LiODFB | / | 0.5% M8 |
| E9 | 50%EC+50%D MC | 3M LiFSI | / | 1% M9 |
| E10 | 50%EC+50%D MC | 1M LiTFSI | 0.3%PFPN+0.2 %VC | 1% M10 |
| E11 | 50%EC+50%D EC | 1M LiODFB | / | 2% M11 |
| E12 | 50%EC+50%D EC | 1M LiODFB | 0.5%TMP | 2% M12 |
| E13 | 50%EC+50%D EC | 1M LiPF₆ | / | 3% M13 |
| E14 | 50%EC+50%D EC | 1M LiPF₆ | / | 3% M14 |
| E15 | PC | 0.8M LiBOB | 0.5%DTD | 1% M15 |

| | | | | |
|---|---|---|---|---|
| Note: 1M denoted 1 mol/L. Comparative samples: the M1-M15 were placed with blanks according to the proportion of E1-E15 (i.e., M1-M15 were not added), so that the corresponding conventional liquid-state electrolyte comparative samples L1-L15 can be obtained. | | | | |

### (4) Assembly of the coin cell

The coin cell was assembled by using the liquid-state electrolyte series E1-E15 containing the structure in Examples of the present disclosure as the additive and the conventional liquid-state electrolyte L1-L15 Comparative samples, the specific assembling process was as follows: the coin cell was assembled by using a negative electrode shell, a negative electrode, a PE/Al₂O₃ separator, an electrolyte, a positive electrode, a stainless steel sheet, a spring piece and a positive electrode shell, then the long-cycle tests were carried out at room temperature, wherein the cycle modes comprised 1 charge/discharge cycle of 0.1C/0.1C, 5 charge/discharge cycles of 0.2C/0.2C, and 44 charge/discharge cycles of 1C/1C (C represented the rate), the positive electrode was a disc with the diameter of 12mm, the negative electrode was a disc with the diameter of 14mm, and the separator was a disc with the diameter of 16.2mm, which was a commercially available Al₂O₃/PE porous separator.

The battery systems prepared with E1-E15 were batteries 1-15 respectively, and the battery systems prepared with L1-L15 were comparative batteries 1-15 respectively. The specific configuration and voltage range of the batteries were shown in Table 3. The testing results of first cycle discharge specific capacity, first cycle efficiency, and the capacity retention rate after 50 charge/discharge cycles at room temperature of batteries 1-15 and comparative batteries 1-15 were shown in Table 4.

**Table 3 Configuration and test mode of batteries in Examples and comparative batteries in Comparative Examples**

| Batteries in Examples and comparative batteries in Comparative Examples | Positive and negative electrodes system of the battery | Voltage range | Cycle mode |
|---|---|---|---|
| Battery 1~Battery 4 | A1 | 3~4.45V | 0.1C/0.1C 1 cycle +0.2C/0.2C cycles +1C/1C 44 cycles |
| Comparative battery 1~ 4 | | | |
| Battery 6~Battery 8 | A2 | 3~4.2V | 0.1C/0.1C 1 cycle +0.2C/0.2C 5 cycles +1C/1C 44 cycles |
| Comparative battery 6~ 8 | | | |
| Battery 9~Battery 12 | A3 | 3~4.2V | 0.1C/0.1C 1 cycle +0.2C/0.2C 5 cycles +1C/1C 44 cycles |
| Comparative battery 9~ 12 | | | |
| Battery 13~Battery 14 | A4 | 3~4.2V | 0.1C/0.1C 1 cycle +0.2C/0.2C 5 cycles +1C/1C 44 cycles |
| Comparative battery 13~ 14 | | | |
| Battery 15 | A5 | 3~4.7V | 0.1C/0.1C 1 cycle +0.2C/0.2C 5 cycles +1C/1C 44 cycles |
| Comparative battery 15 | | | |
| Battery 5 | A7 | 1.5~4V | 0.1C/0.1C 1 cycle +0.2C/0.2C 5 cycles +1C/1C 44 cycles |
| Comparative battery 5 | | | |

**Table 4 Comparison of testing results of batteries in Examples and comparative batteries in Comparative Examples**

| Batteries in Examples and comparative batteries in Comparative Examples | First cycle discharge specific capacity (mAh/g) | First cycle efficiency (%) | Capacity retention rate after 50 cycles (%) |
|---|---|---|---|
| Battery 1 | 160.9 | 82.7 | 89.0 |
| Comparative battery 1 | 127.3 | 74.3 | 77.3 |
| Battery 2 | 161.0 | 82.8 | 88.7 |
| Comparative battery 2 | 127.4 | 74.4 | 77.5 |
| Battery 3 | 161.2 | 83.3 | 89.3 |
| Comparative battery 3 | 154.4 | 81.1 | 83.4 |
| Battery 4 | 161.5 | 83.2 | 89.2 |
| Comparative battery 4 | 154.3 | 81.2 | 83.6 |
| Battery 5 | 109.6 | 81.1 | 91.5 |
| Comparative battery 5 | 95.5 | 70.3 | 86.3 |
| Battery 6 | 171.4 | 83.5 | 89.4 |
| Comparative battery 6 | 141.3 | 75.4 | 77.4 |
| Battery 7 | 172.3 | 84.2 | 89.7 |
| Comparative battery 7 | 164.2 | 82.1 | 87.0 |
| Battery 8 | 171.6 | 83.7 | 89.6 |
| Comparative battery 8 | 141.3 | 75.4 | 77.4 |
| Battery 9 | 199.7 | 92.1 | 90.5 |
| Comparative battery 9 | 180.0 | 84.3 | 82.1 |
| Battery 10 | 201.6 | 92.5 | 91.3 |
| Comparative battery 10 | 197.3 | 90.3 | 87.2 |
| Battery 11 | 199.8 | 92.2 | 90.5 |
| Comparative battery 11 | 180.1 | 84.4 | 82.0 |
| Battery 12 | 201.9 | 92.5 | 91.4 |
| Comparative battery 12 | 197.3 | 90.3 | 87.3 |
| Battery 13 | 168.4 | 81.7 | 89.6 |
| Comparative battery 13 | 146.2 | 73.5 | 82.1 |
| Battery 14 | 168.2 | 81.8 | 89.5 |
| Comparative battery 14 | 146.3 | 73.4 | 82.2 |
| Battery 15 | 139.7 | 89.5 | 89.8 |
| Comparative battery 15 | 135.3 | 87.0 | 87.0 |

As indicated by the testing results between the batteries of the Examples and comparative batteries of the Comparative Examples, when the positive and negative electrode systems were the same in the coin cells, the first cycle efficiency, the first cycle discharge specific capacity and the capacity retention rate of the batteries using the structure M1-M15 of the present disclosure as the liquid-state electrolyte additives were much better than those of the batteries without adding the liquid-state electrolyte additives, and the properties were better than those of the conventional additives. In addition, in the presence of the conventional additives, the batteries prepared by using the boron trifluoride salt of the present disclosure as an additive showed more excellent electrochemical properties.

### II. As salts in the liquid-state electrolytes

### (1) Preparation of the liquid-state electrolytes

The series of liquid-state electrolytes R2, R3, R7 and R11 were obtained by uniformly mixing M2, M3, M7 and M11 with an organic solvent, a conventional additive and a conventional salt; the series of conventional liquid-state electrolytes Q2, Q3, Q7 and Q11 were obtained by uniformly mixing a conventional salt, an organic solvent and a conventional additive; each of the used solvents and the functional additives comprised the solvents and the functional additives described in the Part "I"' of the Examples. Specific components and ratios of the liquid-state electrolytes were shown in Table 5.

**Table 5 The liquid-state electrolytes prepared by using the synthesized boron-containing organic substances as the salts**

| Liquid-state electrolytes | Solvents and percentages (volume ratio) | Salts and concentrations | Conventional additives and percentages (mass ratio in salts) |
|---|---|---|---|
| R2 | 30%EC+70%EMC | 0.8M M2+0.2M LiPF6 | 1%FEC |
| Q2 | | 1M LiPF6 | |
| R3 | 30%EC+70%EMC | 0.7M M3+0.3M LiPF6 | 1%FEC |
| Q3 | | 1M LiPF6 | |
| R7 | 30%EC+70%EMC | 1M M7 | 1%FEC |
| Q7 | | 1M LiBF4 | |
| R11 | 30%EC+70%EMC | 1M M11 | 1%FEC |
| Q11 | | 1M LiBF4 | |

### (2) Assembly of batteries

The coin cell was prepared by using the resulting series of liquid-state electrolyte R (shown in Table 5) and conventional liquid-state electrolyte Q (shown in Table 5), the positive and negative electrodes, the size of separator, the assembly method, and the charge/discharge cycle mode of the battery were identical to the coin battery shown in Part "I" of the Example, namely the batteries 2, 3, 7, 11 and the corresponding comparative batteries, respectively. The specific configuration, the cycle mode, and the voltage range of the batteries were shown in Table 6; the testing results of the first cycle discharge specific capacity, first cycle efficiency, and the capacity retention rate after 50 cycles of the batteries and the comparative batteries at room temperature were shown in Table 7.

**Table 6. Configurations and testing modes for batteries of Examples and comparative batteries of Comparative Examples**

| Batteries in Examples and batteries in Comparative Examples | Liquid-state electrolytes | Positive and negative electrodes system of the battery | Voltage range | Cycle mode |
|---|---|---|---|---|
| Battery 2 | R2 | A1 | 2.8~4.45V | |
| Comparative battery 2 | Q2 | | | 0.1C/0.1C cycle +0.2C/0.2C cycles +1C/1C 44 cycles |
| Battery 3 | R3 | A2 | 2.8~4.2V | |
| Comparative battery 3 | Q3 | | | |
| Battery 7 | R7 | A3 | 2.8~4.2V | |
| Comparative battery 7 | Q7 | | | |
| Battery 11 | R11 | A6 | 2.8~4.5V | |
| Comparative battery 11 | Q11 | | | |

**Table 7 Comparison of testing results of the batteries in Examples and the batteries in Comparative Examples shown in Table 6**

| Batteries in Examples and batteries in Comparative Examples | First cycle discharge specific capacity (mAh/g) | First cycle efficiency (%) | Capacity retention rate after 50 cycles (%) |
|---|---|---|---|
| Battery 2 | 157.5 | 83.2 | 87.6 |
| Comparative battery 2 | 154.4 | 81.3 | 83.4 |
| Battery 3 | 169.1 | 83.7 | 89.0 |
| Comparative battery 3 | 164.7 | 82.4 | 86.0 |
| Battery 7 | 199.6 | 92.6 | 89.8 |
| Comparative battery 7 | 197.2 | 90.2 | 87.5 |
| Battery 11 | 190.5 | 91.7 | 91.1 |
| Comparative battery 11 | 187.3 | 88.3 | 89.3 |

In summary, the boron trifluoride salts provided by the present disclosure were dissolved in non-aqueous solvents, the ions can be easily solvated, in order to provide the batteries with higher ionic conductivity and higher stability, and showed very excellent electrochemical performance, higher first cycle efficiency, higher first cycle discharge specific capacity, and higher capacity retention rate in liquid-state battery systems consisting of an anode made of LCO, NCM811 and a cathode made of SiOC450, Li, the properties were comparable with or superior to those of the corresponding batteries prepared by using the conventional salts.

### III. As salts in the solid-state electrolyte

### (1) Preparation of the polymer electrolyte membrane

The structures provided by the present disclosure, polymers, and inorganic fillers were dissolved in dimethyl formamide (DMF) according to the ratio in an environment having a dew point less than -60°C, the materials were stirred and mixed, then coated to form a membrane, subsequently rolled and dried to obtain polymer electrolyte membranes G8, G10, G13, G15, and polymer comparative electrolyte membranes G'1-G'2. The specific components and ratios were as shown in Table 8. The polymer was selected from polyethylene oxide (PEO) with a molecular weight (MW) of 1,000,000, and the inorganic filler was selected from LLZO having a median particle size of 160nm, i.e., Li₇La₃Zr₂O₁₂ inorganic oxide solid-state electrolyte with a crystalline form of cubic phase and a median particle size of 160 nm.

**Table 8 Specific composition and ratios of the polymer electrolyte membranes**

| Polymer electrolyte membranes | Polymer | Salts | Inorganic fillers | The mass ratio | Solvents |
|---|---|---|---|---|---|
| G8 | PEO with an MW of 1,000,000 | M8 | 160nm LLZO | 4. 2: 1: 0.8 | DMF |
| G10 | PEO with an MW of 1,000,000 | M10 | / | 4. 2: 1 | DMF |
| G13 | PEO with an MW of 1,000,000 | M13 | 160nm LLZO | 4. 2: 1: 0.8 | DMF |
| G15 | PEO with an MW of 1,000,000 | M15 | / | 4. 2: 1 | DMF |
| G'1 | PEO with an MW of 1,000,000 | LiTFSI | 160nm LLZO | 4. 2: 1: 0.8 | DMF |
| G'2 | PEO with an MW of 1,000,000 | LiTFSI | / | 4. 2: 1 | DMF |

### (2) Preparation of positive electrode

The positive electrode primary material active substance, polymer + salt (in the same ratio as the polymer electrolyte membrane), the electron conductive additive, and a binder were mixed according to a mass ratio of 91.3: 4.8: 2.1: 1.8 and stirred in a solvent under an environment with a dew point below -60°C, the mixture was coated on an aluminum foil, then dried and rolled to obtain an all-solid-state positive electrode. The active substances were selected from the group consisting of lithium cobalt oxide (LiCoO₂, abbreviated as LCO), lithium nickel cobalt manganese oxide (NCM 811), the electron conductive additive was Super P, the binder was polyvinylidene fluoride (PVDF), and the solvent was NMP.

The metallic lithium sheet with a thickness of 50µm was rolled onto a copper foil as a cathode sheet.

### (3) Battery assembly and test

The polymer electrolyte membrane, positive electrode and negative electrode were cut and assembled into a 1Ah all-solid-state pouch battery, the battery was subjected to the long cycle testing consisting of 2 cycles of 0.1C/0.1C and 48 cycles of 0.3C/0.3C at the temperature of 50°C. The specific assembly system and testing method for the batteries were shown in Table 9, and the test results were shown in Table 10.

**Table 9 Configuration and testing method for the batteries and comparative batteries**

| Batteries in Examples and batteries in Comparative Examples | Polymer electrolyte membrane | Positive and negative electrodes system | Voltage range | Cycle mode |
|---|---|---|---|---|
| Battery 8 | G8 | A3 | 3~4.2V | 0.1C/0.1C 2 cycles, +0.3/0.3C 48 cycles |
| Battery 10 | G10 | A3 | | |
| Battery 13 | G13 | A6 | | |
| Battery 15 | G15 | A6 | | |
| Comparative battery 1 | G'1 | A3 | | |
| Comparative battery 2 | G'2 | A6 | | |

**Table 10 Comparison of test results of batteries and comparative batteries in Table 9**

| Batteries in Examples and batteries in Comparative Examples | First cycle discharge capacity (Ah) | First cycle efficiency (%) | Capacity retention rate after 50 cycles (%) |
|---|---|---|---|
| Battery 8 | 0.89 | 89.5 | 85.5 |
| Battery 10 | 0.90 | 90.2 | 85.3 |
| Battery 13 | 0.87 | 87.4 | 87.6 |
| Battery 15 | 0.86 | 86.7 | 87.5 |
| Comparative battery 1 | 0.88 | 87.3 | 67.6 |
| Comparative battery 2 | 0.85 | 86.5 | 68.7 |

As shown by the data in Table 9 and Table 10, the batteries prepared with M8, M10, M13 and M15 had excellent long-cycle stability and better property than the cycle performance of the corresponding batteries prepared with LiTFSI, the possible reasons may be that the sulfur-based boron trifluoride salt of the present invention not only had excellent ion transport performance, but also formed a more dense and stable passivation layer on the anode surface, thereby preventing catalytic decomposition of the electrolyte components by the positive electrode active material. Furthermore, the boron trifluoride salt of the present invention did not corrode the current collector, thus exhibiting improved electrochemical performance over the conventional salts.

### IV. The single-ion conductor polymer electrolyte

### (1) Preparation of the electrolyte

The monomers M2, M12, M13, M14, a plasticizer, battery additives, a salt, and an initiator were mixed uniformly to form a precursor solution, and the precursors S2, S12, S13, S14 were obtained, the specific ratios of ingredients were as shown in Table 11. The initiator in use was Azobisisobutyronitrile (AIBN).

**Table 11 Composition of the precursor solution**

| Precurs ors | Monom ers | Plasticiz ers | Batter y additiv es | Salts | Initiato rs | Mas s rati os | Temperature×t ime |
|---|---|---|---|---|---|---|---|
| S2 | M2 | EC/EM C | FEC | / | AIBN | 70: **28.5** : 1: 0.5 | 70°C×10h |
| S12 | M12 | EC/EM C | FEC | LiPF6 | AIBN | 60: 28.5 : 1: 10: 0.5 | 70°C×10h |
| S13 | M13 | EC/EM C | FEC | LiODF B | AIBN | 60: 28.5 : 1: 10: 0.5 | 70°C×10h |
| S14 | M14 | EC/EM C | FEC | LiODF B | AIBN | 60: 28.5 : 1: 10: 0.5 | 70°C×10h |

### (2) Assembly of batteries

The electrolyte precursor solutions S2, S12, S13, S14 obtained from Table 11 which were used for assembling the pouch batteries respectively, namely the batteries (i.e., Examples) 2, 12, 13, 14, the specific assembly process was as follows: the positive electrode having a dimension of 64mm×45mm, the negative electrode having a dimension of 65mm×46mm, and the separator were assembled into the 2Ah pouch battery cell, which was subjected to lamination, baking, electrolyte injection, and formation process to obtain a secondary battery, the battery assembly system was A2, and the separator was a commercially available PE/A1₂O₃ porous membrane.

### (3) Test of batteries

After the secondary batteries prepared from Examples 2, 12, 13, and 14 were completely cured, a first cycle discharge capacity, a first cycle efficiency, and a capacity retention rate after 50 cycles of the batteries were tested at room temperature, the test voltage was within a range of 3.0-4.2V, wherein the cycle mode was composed of 2 cycles of 0.1C/0.1C and 48 cycles of 0.3C/0.3C (C represented the rate), and the test results were as shown in Table 12.

**Table 12 Test results of batteries of Examples**

| Batteries in Examples | First cycle discharge capacity (Ah) | First cycle efficiency (%) | Capacity retention rate after 50 cycles (%) |
|---|---|---|---|
| Battery 2 | 1.81 | 90.5 | 79.3 |
| Battery 12 | 1.94 | 96.7 | 90.4 |
| Battery 13 | 1.92 | 95.6 | 90.1 |
| Battery 14 | 1.95 | 97.3 | 90.3 |

As shown in Table 12, it was discovered through test data of batteries in the Examples that the precursors S2, S12, S13, and S14 composed of polymerizable monomers M2, M12, M13, M14 were used as the polymer electrolytes after in-situ curing when the precursors were used in the solid-state battery systems consisting of NCM811 as the anode and SiOC450 as the cathode, the batteries exhibited very excellent electrochemical performance, higher first cycle efficiency, higher first cycle discharge capacity, and higher capacity retention rate. A solid-state electrolyte with excellent performance can also be obtained after polymerization of the monomers in Example 2. In addition, when the electrolyte was used in combination with a conventional salt, the batteries exhibited more excellent electrochemical performance due to the increased number of dissociated ions.

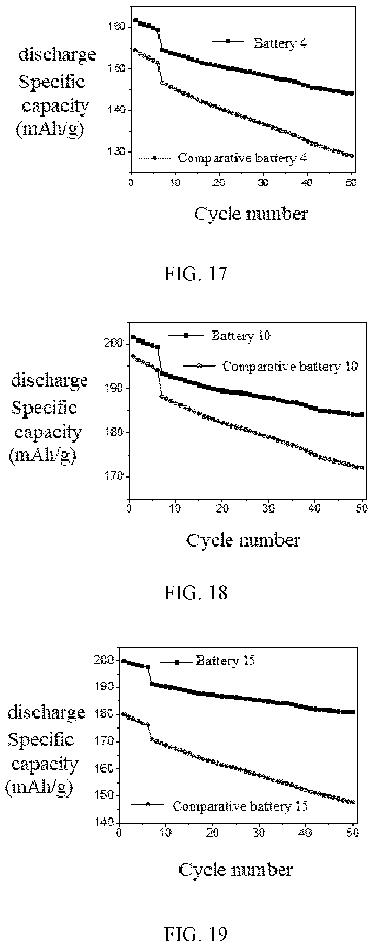

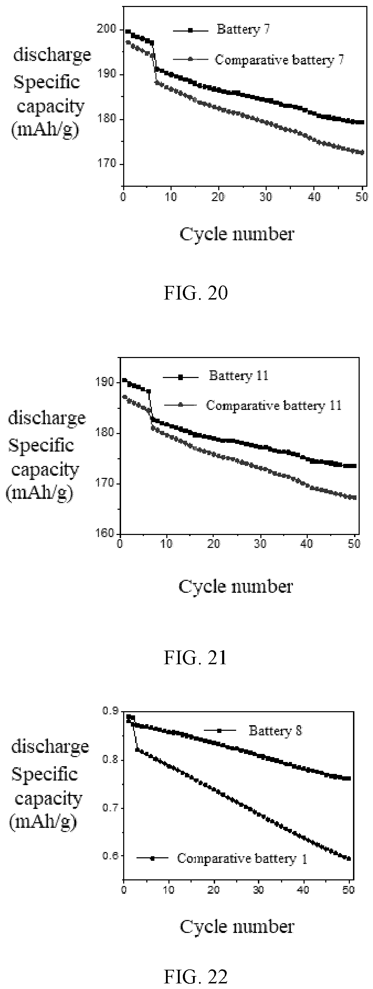

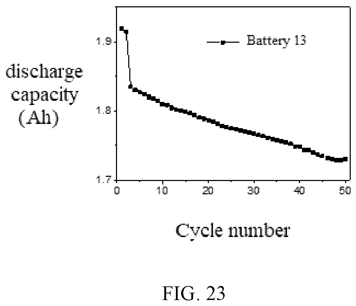

In addition, the appended figures select and display some graphs showing the test effects of batteries prepared with the sulfur-based boron trifluoride salt containing an unsaturated heterocycle as an additive and a salt. FIGS. 16-19 are graphs comparing the effects of batteries 2/4/10/15 prepared with Examples 2/4/10/15 as the electrolyte additives with the corresponding comparative batteries 2/4/10/15 not containing Examples 2/4/10/15 respectively; FIGS. 20-21 are graphs comparing the effects of batteries 7/11 prepared with Examples 7/11 as the electrolyte salts with the corresponding comparative batteries 7/11 not containing Examples 7/11 respectively; FIG. 22 illustrates a graph comparing the effects of the battery 8 prepared with the Example 8 as the salt in a solid-state electrolyte with the comparative battery 1 prepared with LiTFSI as a salt; FIG. 23 illustrates a graph showing the effects of a battery prepared with a polymer electrolyte after polymerization of the monomer in Example 13 of the present disclosure. It is illustrated by the figures that the structure of the present invention has excellent effects. In addition, in the cycle diagram, the line with small squares 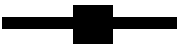 "" is disposed denotes the battery in the Example, the line with small circles "" 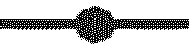 is disposed denotes the comparative battery in the Comparative Example, as can be seen from the figures, the lines representing the batteries in Examples are above the lines representing the batteries in Comparative Examples, thus the batteries in Examples exhibit the superior effects.

To sum up, the first cycle efficiency, the first cycle discharge specific capacity, the first cycle discharge capacity, capacity retention rate and other properties have a direct and significant influence on the overall performance of the batteries, and directly determine whether the batteries are usable. As a result, improving the battery properties is an objective or direction for many researchers in the field, however, the improvements of the battery properties are not easily achieved, the improvement of battery properties by about 3-5% is generally regarded as significant progress. The present inventors have surprisingly found in preliminary experimental data that the improvements in these properties are very large compared to the conventional data, especially use as an electrolyte additive, the properties are improved by about 5-30%; in addition, the combined use of an additive of the present disclosure with conventional additives also shows desirable effects. The examples only show the use of additives as a liquid-state electrolyte, the boron trifluoride salt provided by the present disclosure can also be used as an additive of the solid-state electrolyte, the content is not further displayed due to space limitations. More surprisingly, the composition can also be used as salt in electrolyte and the effects are excellent, the experiments show that the effects of said composition are not inferior to, or even superior to the corresponding battery made of the traditional lithium salt, and the structure of the present disclosure can also be applied in the solid-state electrolyte and exhibits the excellent effects. In addition, the present application can also be used as a monomer in a single-ion conductor polymer electrolyte, the content is not further displayed due to space limitations. More importantly, the types of structures of the present disclosure have significant differences from the conventional structures, the novel structures provide a new direction and idea for research and development in the art, and explore a broad space for further development; in addition, a single structure of the present disclosure has many uses , and has great significance.

### Example 17

In order to further investigate and understand the structural performance in the present disclosure, the applicant evaluated its effects on the long cycle performance of the batteries at room temperature by using the structure M16 and the following structure W as an electrolyte additive respectively. The structure of the present disclosure was selected as the following structure M16, the following comparative structure was structure W.

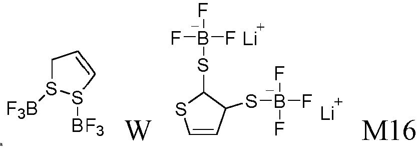

### (1) Preparation of the liquid-state electrolyte

**Table 13 W, M16 as additive formulated electrolyte**

| Liquid-state electrolytes | Solvents and percentages | Salts and concentrations | W and M16 used as an additive and percentages (mass ratio in salts) |
|---|---|---|---|
| S0 | 30%EC+70% EMC | 1M LiPF6 | / |
| S1 | 30%EC+70% EMC | 1M LiPF6 | 1%W |
| S2 | 30%EC+70% EMC | 1M LiPF6 | 1%M16 |

In the above Table, S0 denoted the control group.

### (2) Assembly of coin cell

The resulting electrolytes S0-S2 were assembled into coin cells, wherein the anodes and cathodes, the separator size, the assembly process, and the cycle mode of the batteries are the same as those of the coin cells described in Part "I" of Example 16, the prepared coin cells were batteries Y0-Y2 respectively. The specific configuration, cycle mode, and voltage ranges of the batteries were shown in Table 14, and the test results were shown in Table 15.

**Table 14. Assembly and testing mode of batteries**

| Batteries | Positive and negative electrodes system of the battery | Voltage range | Cycle mode |
|---|---|---|---|
| Y0~Y2 | A2 | 2.8~4.2V | 0.1C/0.1C 1 cycle +0.2C/0.2C 5 cycles +1C/1C 44 cycles |

**Table 15 Test results of the batteries**

| Batteries | First cycle discharge specific capacity (mAh/g) | First cycle efficiency (%) | Capacity retention rate after 50 cycles (%) |
|---|---|---|---|
| Y0 | 141.3 | 75.4 | 77.4 |
| Y1 | 157.0 | 80.5 | 84.0 |
| Y2 | 171.6 | 83.7 | 89.6 |

As indicated by the test results of batteries Y0-Y2, both W and M16 can be used as an electrolyte additive to improve the first cycle efficiency, the discharge specific capacity of 1-50 charge/discharge cycles and the capacity retention rate of batteries. However, compared with W, the M16 has more obvious improvement in the first cycle efficiency and the first cycle discharge specific capacity of batteries, the reason may be that W is a non-salt complex, so that its structure is greatly different from that of the present disclosure, and it does not contain the group -SBF₃Li, when the structure W is used as an additive and has a mass ratio of 1% in the salt, the desirable passivation layer cannot be formed on the anode and cathode. M16 contains two groups -SBF₃M and it per se includes a lithium source, thus it consumes less amount of lithium ions escaped from the anode during the process of forming the passivation layer, thereby improving the first cycle efficiency, the first cycle discharge specific capacity and the capacity retention rate of batteries. That is, the boron trifluoride organic salt (e.g., M16) of the present disclosure can be used as both additive and salt in an electrolyte, its dual function in an electrolyte can produce synergy, thus its effects are superior to other components. The applicant is further exploring the more specific and explicit mechanism. However, it is certain that the presence and amount of the group -SBF₃M have a substantial influence on the battery performance.

In the present disclosure, the structures in Examples 1-15 are selected as representative to explain the method and effects of the present disclosure. Each of the other structures not shown herein can be prepared with the method described in any of Examples 1-5. The method defines that boron trifluoride organic salt product is obtained by reacting a raw material, boron trifluoride compound, and M source, namely the group -SH in the raw material is changed into -SBF₃M, wherein M may be Li⁺, Na⁺ and the like, and other structures are unchanged. In addition, the research team of the applicant has already implemented the serial effect tests on many structures, and the effects are very good and similar to the effects in the above Examples, for instance, the boron trifluoride salts in the present disclosure prepared with the raw materials represented by the following formulas: 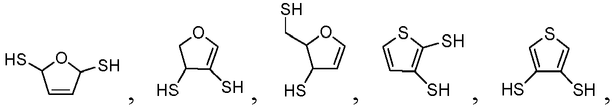 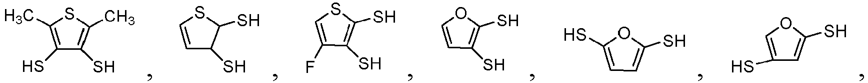 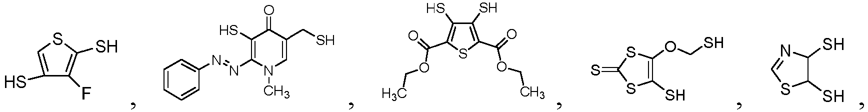 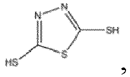 each of the boron trifluoride salts produces desirable effects, but only the data of some structures is described herein due to the space limitations.

It shall be noted in the present disclosure: (1) the group -BF₃ in -SBF₃M must be linked to sulfur atom S, which is further connected with a carbon atom C via a single bond, thus the sulfur atom S cannot be sulfur located on the ring. If S is connected with a non-C atom, or S is located on a ring (or S is also connected with two other groups), the structure is greatly different from the present disclosure, thus it is unpredictable whether the structure can be used in an electrolyte of the present disclosure, what effects will be produced, and which scenario the structure can be applied; therefore, the present inventors will carry out the independent research on the structures, the content will not be further discussed herein; (2) the boron trifluoride salt electrolyte containing an unsaturated heterocycle in the present disclosure is preferably an organic substance with a non-polymeric state, the polymeric state has its unique characteristics and properties, the applicant will perform the specialized research on the polymeric state, the present disclosure is in a non-polymeric state.

Both of the above conditions need to be satisfied in the present disclosure, and if not, the properties are greatly different from those of the present disclosure, so that the modified application scenario or the effect is not predictable, and there may be large change; if the change is valuable, the present inventors will further implement specialized research in the future.

The applicant has performed a very large number of experiments on the series of structures in the present disclosure, after the effects of the first structure are obtained, the subsequent test exploration and data supplement span about two years, and sometimes, in order to better compare with the existing systems, a plurality of experiments are performed for the same structures and systems, thus there may be some errors between the different batch experiments.

In addition, the raw materials in the Examples of the present disclosure are directly commercially available, or can be obtained through simple and conventional synthesis, the raw materials or the synthesis of said raw materials does not have any innovation, thus the content will not be further described herein.

Finally, it should be understood that the aforementioned embodiments merely serve to illustrate the present application, instead of imposing limitations thereto; although the invention has been described in detail with reference to the above-described embodiments, the ordinary skilled person in the art shall comprehend that the applicant can make amendments on the technical solution described in the Examples, or perform the equivalent replacement regarding a portion or all of the technical features described in the technical solution, only if the amendment or replacement does not cause the essence of the corresponding technical solution to depart from the protection scopes of the technical solution as defined in the appended claims.

## Claims

1. A sulfur-based boron trifluoride salt electrolyte containing an unsaturated heterocycle comprising an unsaturated heterocyclic sulfur-based boron trifluoride salt represented by general formula I: 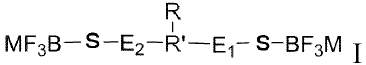 in the general formula I, R' represents an unsaturated heterocycle at least containing one heteroatom and at least one unsaturated bond; the unsaturated heterocycle is a five- to six -membered ring; the heteroatom is selected from the group consisting of S, N, O, P, or Si; M is metal cation, wherein M in general formula I comprises Na⁺, K⁺ or Li⁺; E₁ and E₂ are independently nonexistent, or selected from the group consisting of nonexistent, -CH₂-, carbonyl, ester groups, ethyl, n-propyl, isopropyl, n-butyl, isobutyl, n-pentyl, isopentyl, sec-pentyl, neopentyl, hexyl, vinyl, propenyl, butenyl, pentenyl, ethynyl, propynyl, butynyl, cyclohexyl, cyclopentyl, 1,3-hexadienyl, -C=N-, -C(CH₃)₂-, -CH(CH₃)-, -CH(CF₃)-, - C(CF₃)₂-, -SCH₂CH₂-, -CH₂CH₂SCH₂CH₂-, -CH₂CH₂CH(CH₃)-, - Z'₁CH₂CH₂-, -O-CH₂(CH₂)₄CH₂-, -N=C(CH₃)-, -O-(CH₂)₆-, -CH₂Z'₁CH₂-, -CH₂(CH₃)Z'₁CH₂-, -CH₂CH₂Z'₁CH₂-, 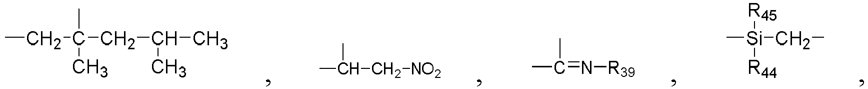 -O-CH₂-CH₂-O-CH₂-CH₂-, 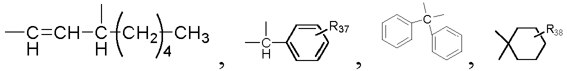 and the groups formed after C=O of any one of the aforementioned groups is replaced by C=S, and the groups formed after C-O of any one of the aforementioned groups is replaced by C-S; the carbonyl comprises -CO-, - CH₂CO-, -CH₂CH₂CO-, -CH₂CH₂CH₂CO-, -CH₂COCH₂-, - CH₂CH₂COCH₂-, -CH=CH-CO-, -OCH₂CH₂CH₂CO-, =N-CH₂-CO-, - Z'₁CH₂CO-, -Z'₁CH₂CH₂CO-, -Z'₁CH₂CH₂CH₂CO-, -CH₂(CH₂)₅CO-, - CH₂(CH₂)₆CO-, 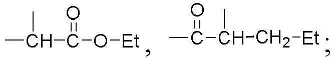 the ester groups comprise - COOCH₂-, -COOCH₂CH₂-, and -CH₂COOCH₂-; wherein Z'₁ in this paragraph is selected from the group consisting of -O-, -S-, -S-S-, 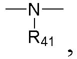 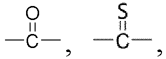 sulfonyl, sulfonimidyl or sulfonyloxy group, wherein R₄₁ is H, methyl, ethyl, propyl, isopropyl, butyl, ethoxyl or methoxyl, and any hydrogen atom H in R₄₁ may be substituted by F or Cl; R₄₄, R₄₅ are independently alkyl or ring; R₃₉ is selected from H, methyl, ethyl, propyl, butyl, pentyl, cyclopropyl, cyclopentyl, cyclohexyl, nitro, thiazole, - CH(CH₃)₂, -CH₂CH(CH₃)₂, -CH₂CH₂NO₃, 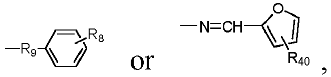 wherein R₈, R₃₇, R₃₈ and R₄₀ are independently nonexistent, a halogen atom, methyl, ethyl, propyl, butyl, fluoromethyl, fluoroethyl, methoxy, nitro, aldehyde group, ketone, ester, -CH₂-N(CH₃)₂ or -CH(CH₃)-Ph, R₉ is nonexistent or methylene; R is a substituent, represents that any one H atom on the ring can be replaced by the substituent, the substituent can replace one H atom or replace two or more H atoms, and if two or more H atoms are replaced, the substituents may be the same or different.

2. The electrolyte of claim 1, wherein in the general formula I, the unsaturated bond is a double bond;
the two -SBF₃M groups in general formula I may be in an ortho-position, a meta-position, separated by 2 atoms or separated by more than two atoms; preferably in general formula I, the atom directly linked with the group - SBF₃M is carbon atom C;
preferably, the carbon atom C linked with the group -SBF₃M includes a carbonyl carbon and a non-carbonyl carbon, wherein the carbonyl carbon comprises -C=O or -C=S, the non-carbonyl carbon has a structure without containing =O or =S on the carbon atom C;
preferably, the H on any one carbon atom C in general formula I may be independently replaced by halogen.

3. The electrolyte of claim 2, wherein the substituent R is selected from H, halogen atoms, carbonyl, ester groups, aldehyde groups, ether oxygen groups, ether sulfur groups, =O, =S, 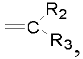 nitro, cyano group, amino, amide, sulfonamido, sulfonyl alkane, sulfonic acid groups, hydrazino, diazo, alkyl, heteroalkyl, alkenyl, heteroalkenyl, alkynyl, heteroalkynyl, alkenyl-alkynyl, heteroalkenyl-alkyny, cyclic substituent, salt substituent, and groups formed by substituting any hydrogen atom H in the mentioned groups by a halogen atom;
wherein the ester group comprises carboxylic ester, carbonic ester, sulfonic ester and phosphate, R₂ and R₃ are independently H, alkyl, heteroalkyl, alkenyl, heteroalkenyl, alkynyl, heteroalkynyl, alkenyl-alkynyl, heteroalkenyl-alkynyl, or a ring;
preferably, any one structure of the heteroalkyl, heteroalkenyl, heteroalkynyl, and heteroalkenyl-alkynyl contains at least one of the non-carbon atoms selected from the group consisting of halogen, S, N, O, P, Se, Ca, Al, B, or Si; the ring substituent comprises a three- to eight-membered ring and a multi-ring formed by at least two monocyclic rings; the salt substituents include, but are not limited to, sulfate, sulfonate, sulfonimide, carbonate, carboxylate, thioether salt, oxyether salt, ammonium salt, hydrochloride, nitrate, azide salt, silicate, phosphate;
the carbonyl is -R₁₀COR₁₁, the ester group is -R₁₂COOR₁₃, -R₁₂OCOR₁₇, - R₁₂SO₂OR₁₃, R₁₂O-CO-OR₁₃, or 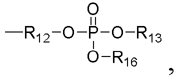 the ether oxygen group is -R₁₄OR₁₅, and the ether sulfur group is -R₁₄SR₁₅; the sulfonyl alkane is - R₁₈SO₂R₁₉, the amino is =N-R₂₀, 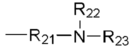 or -CH=N-R₂₄, the amide is 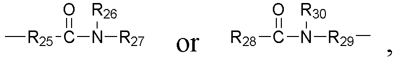 the sulfonamido is 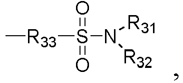 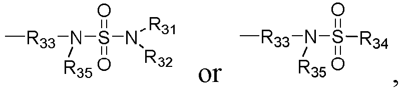 wherein R₂, R₃, R₁₀, R₁₁, R₁₂, R₁₃, R₁₄, R₁₅, R₁₆, R₁₇, R₁₈, R₁₉, R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ are independently alkyl, heteroalkyl, alkenyl, heteroalkenyl, alkynyl, heteroalkynyl, alkenyl-alkynyl, heteroalkenyl-alkynyl or ring, the heteroalkyl/ heteroalkenyl/ heteroalkynyl/ heteroalkenyl-alkynyl is an alkyl/ alkenyl/ alkynyl/ alkenyl-alkynyl with at least one of the non-carbon atom; the ring has a type consistent with the type defined by the ring substituent; and R₂, R₃, R₁₀, R₁₂, R₁₄, R₁₈, R₂₀, R₂₁, R₂₂, R₂₃, R₂₄, R₂₅, R₂₆, R₂₇, R₂₉, R₃₀, R₃₁, R₃₂, R₃₃, R₃₅ may independently be H or nonexistent; the group directly linked with N or O can also be a metal ion;
and optionally, the substituent further comprises a substituent in which anyone C=O in any one of the groups is replaced by C=S.

4. The electrolyte of claim 1, wherein the unsaturated heterocycle R' in general formula I is selected from the following rings: furan, 3,4-dihydrofuran, 2,3-dihydrofuran, thiophene, 2,3-dihydrothiophene, 3,4-dihydrothiophene, pyrrole, 3,4-dihydropyrrole, 2,3-dihydropyrrole, imidazole, pyrazole, thiazole, oxazole, isoxazole, triazole, dihydrotriazole, thiadiazole, 1,3-dihydropyridine, 1,4-dihydropyridine, dihydropyrimidine, tetrahydropyrimidine, dihydropyrazine, , dihydropyridazine, dihydrotriazine, pyran, dihydropyran, thiopyran, dihydrothiopyran, 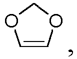 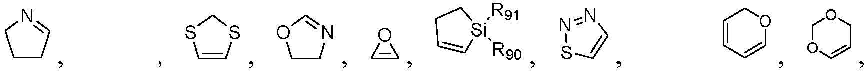 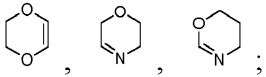 the substituent R is connected to the aforementioned heterocycle R'; two -SBF₃M groups are directly linked to any two or one atom of each of the heterocycle R', or indirectly linked to any two or one atom of each of the heterocycle R' via E1, E2, respectively.

5. The electrolyte of claim 4, wherein general formula I includes, but is not limited to, the following compounds: 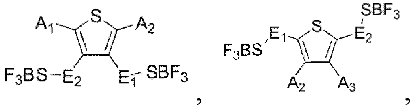 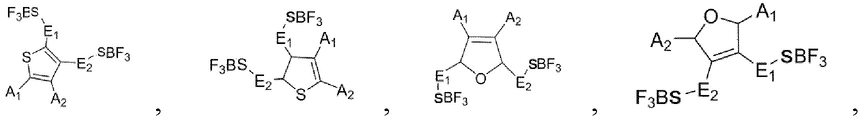 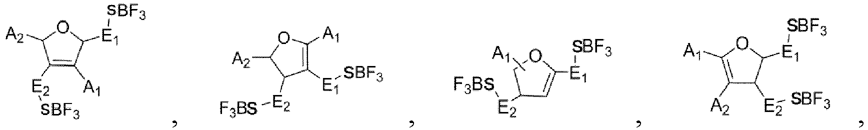 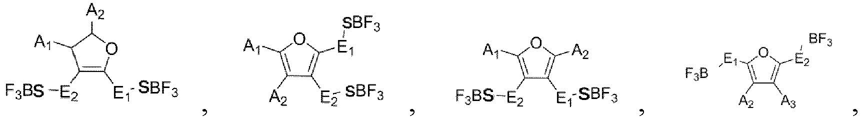 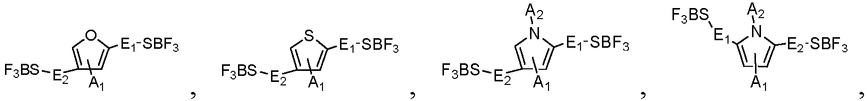 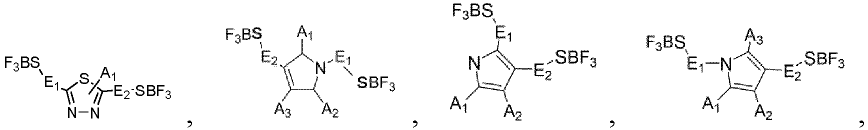 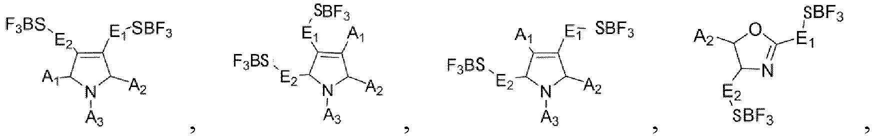 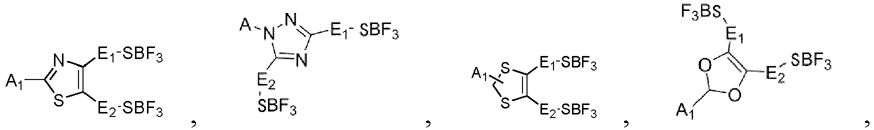 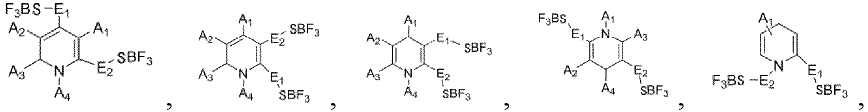 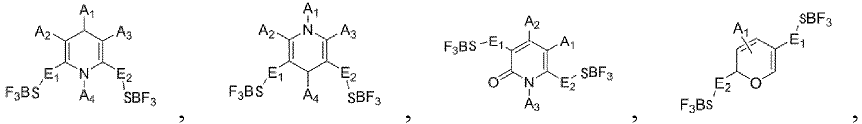 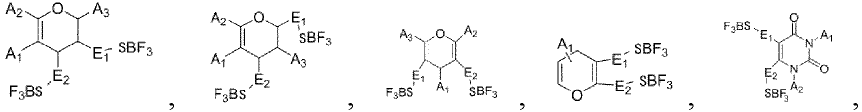 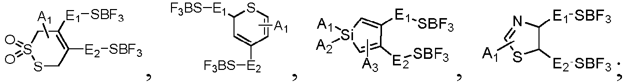
in the above structures, -SBF₃ refers to -SBF₃M; E₁ and E₂ in each cyclic structure are independently consistent with E₁ and E₂ defined by any one of claims 1-4;
any one H on each unsaturated heterocycle may be independently any one substituent selected from A₁, A₂, A₃ or A₄, the A₁, A₂, A₃ and A₄ are each independently selected from any one substituent defined by the substituent R according to any one of claims 1-4.

6. The electrolyte of any one of claims 3-5, wherein the halogen atom in the substituent R, A₁, A₂, A₃, or A₄ comprises F, Cl, Br, I;
R₂, R₃, R₁₀, R₁₁, R₁₂, R₁₃, R₁₄, R₁₅, R₁₆, R₁₇, R₁₈, R₁₉, R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ are independently C₁₋₁₀ alkyl, C₁₋₁₀ heteroalkyl, C₁₋₁₀ alkenyl or C₁₋₁₀ heteroalkenyl, the heteroalkyl or heteroalkenyl is an alkyl or alkenyl having at least one heteroatom; R₂, R₃, R₁₀, R₁₂, R₁₄, R₁₈, R₂₀, R₂₁, R₂₂, R₂₃, R₂₄, R₂₅, R₂₆, R₂₇, R₂₉, R₃₀, R₃₁, R₃₂, R₃₃, R₃₅ may independently be H or nonexistent, and the group directly connected to N or O can also be a metal ion;
the cyano group is selected from -CN, -CH₂CN, -SCH₂CH₂CN or - CH₂CH₂CN.

7. A method for preparing the electrolyte of any one of claims 1-6 comprising the step of reacting an unsaturated heterocyclic binary structure containing two groups -SH, a boron trifluoride-based compound and an M source to obtain a product, namely an unsaturated heterocyclic sulfur-based boron trifluoride salt containing two groups -SBF₃M.

8. A use of the sulfur-based boron trifluoride salt containing unsaturated heterocycle of any one of claims 1-6 in a secondary lithium battery, wherein the use is as follows: the boron trifluoride salt represented by general formula I can be used as salt and also as additive, and a polymerizable monomer can also be used as a single-ion conductor polymer electrolyte and a polymer skeleton after polymerization;
preferably, the use comprises a use in a liquid-state electrolyte, a gel electrolyte, a solid-liquid hybrid electrolyte, a quasi-solid-state electrolyte, and an all-solid-state electrolyte; each of the liquid-state electrolyte, the gel electrolyte, the solid-liquid hybrid electrolyte, the quasi-solid-state electrolyte, and an all-solid-state electrolyte independently comprises the sulfur-based boron trifluoride salt containing an unsaturated heterocycle of any one of claims 1-6;
preferably, the use further comprises a use as a battery or a battery pack, the battery comprises the sulfur-based boron trifluoride salt electrolyte containing an unsaturated heterocycle of any one of claims 1-6 and an anode, a cathode, a separator, and an encapsulation shell; the battery comprises a liquid-state battery, a solid-liquid hybrid battery, a semi-solid-state battery, a gel battery, a quasi-solid-state battery and an all-solid-state battery, wherein each of the liquid state electrolyte, the gel electrolyte, the solid-liquid hybrid electrolyte, the quasi-solid-state electrolyte or an all-solid-state electrolyte can be used in the liquid battery, the solid-liquid hybrid battery, the semi-solid-state battery, the gel battery, the quasi-solid-state battery or the all-solid-state battery; the battery pack includes the battery.

## Patentansprüche

1. Schwefelbasierter Bortrifluoridsalzelektrolyt, der einen ungesättigten Heterocyclus enthält, der ein ungesättigtes heterocyklisches schwefelbasiertes Bortrifluoridsalz umfasst, das von der allgemeinen Formel I dargestellt ist: 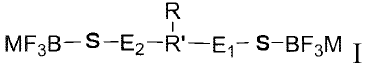
wobei in der allgemeinen Formel I R' einen ungesättigten Heterocyclus darstellt, der mindestens ein Heteroatom und mindestens eine ungesättigte Bindung enthält; der ungesättigte Heterocyclus ein fünf- bis sechsgliedriger Ring ist; das Heteroatom ausgewählt ist aus der Gruppe, die besteht aus S, N, O, P oder Si; M ein Metallkation ist, wobei M in der allgemeinen Formel I Na⁺, K⁺ oder Li⁺ umfasst; E₁ und E₂ unabhängig nicht vorhanden oder ausgewählt sind aus der Gruppe, die besteht aus nicht vorhanden, -CH₂-, Carbonyl, Estergruppen, Ethyl, n-Propyl, Isopropyl, n-Butyl, Isobutyl, n-Pentyl, Isopentyl, sec-Pentyl, Neopentyl, Hexyl, Vinyl, Propenyl, Butenyl, Pentenyl, Ethynyl, Propynyl, Butynyl, Cyclohexyl, Cyclopentyl, 1,3-Hexadienyl, - C=N-, -C(CH₃)₂-, -CH(CH₃)-, -CH(CF₃)-, -C(CF₃)₂-, -SCH₂CH₂-, - CH₂CH₂SCH₂CH₂-, -CH₂CH₂CH(CH₃)-, -Z'₁CH₂CH₂-, -O-CH₂(CH₂)₄CH₂-, - N=C(CH₃)-, -O-(CH₂)₆-, -CH₂Z'₁CH₂-, -CH₂(CH₃)Z'₁CH₂-, -CH₂CH₂Z'₁CH₂- 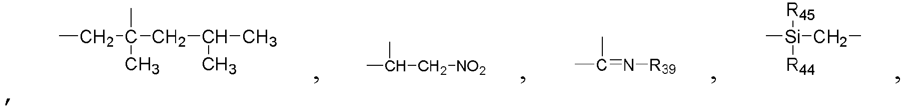 -O-CH₂-CH₂-O-CH₂-CH₂-, 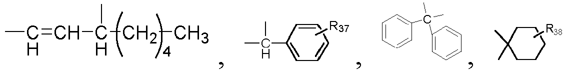 und die Gruppen, die nach C=O einer beliebigen der vorhergehenden Gruppen gebildet sind, mit C=S ersetzt sind und die Gruppen, die nach C-O einer beliebigen der vorhergehenden Gruppen gebildet sind, mit C-S ersetzt sind; das Carbonyl -CO-, -CH₂CO-, -CH₂CH₂CO-, -CH₂CH₂CH₂CO-, -CH₂COCH₂-, -CH₂CH₂COCH₂-, - CH=CH-CO-, -OCH₂CH₂CH₂CO-, =N-CH₂-CO-, -Z'₁CH₂CO-, -Z'₁CH₂CH₂CO-, -Z'₁CH₂CH₂CH₂CO-, -CH₂(CH₂)₅CO-, -CH₂(CH₂)₆CO-, 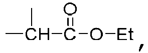 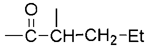 umfasst; die Estergruppen -COOCH₂-, -COOCH₂CH₂- und - CH₂COOCH₂- umfassen; wobei Z'₁ in diesem Abschnitt ausgewählt ist aus der Gruppe, die besteht aus -O-, -S-, -S-S-, 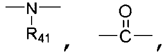 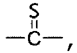 Sulfonyl, Sulfonimidyl oder Sulfonyloxy-Gruppe, wobei R₄₁ H, Methyl, Ethyl, Propyl, Isopropyl, Butyl, Ethoxyl oder Methoxyl ist und ein beliebiges Wasserstoffatom H in R₄₁ substituiert werden kann mit F oder Cl; R₄₄, R₄₅ unabhängig Alkyl oder ein Ring sind; R₃₉ ausgewählt ist aus H, Methyl, Ethyl, Propyl, Butyl, Pentyl, Cyclopropyl, Cyclopentyl, Cyclohexyl, Nitro, Thiazol, -CH(CH₃)₂, -CH₂CH(CH₃)₂, - CH₂CH₂NO₃, 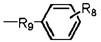 oder 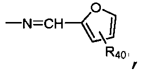 wobei R₈, R₃₇, R₃₈ und R₄₀ unabhängig nicht vorhanden, ein Halogenatom, Methyl, Ethyl, Propyl, Butyl, Fluormethyl, Fluorethyl, Methoxy, Nitro, Aldehyd-Gruppe, Keton, Ester, -CH₂-N(CH₃)₂ oder -CH(CH₃)-Ph ist, R₉ nicht vorhanden oder Methylen ist;
R ein Substituent ist, darstellt, dass ein beliebiges H-Atom auf dem Ring durch den Substituenten ersetzt werden kann, der Substituent ein H-Atom ersetzen kann oder zwei oder mehr H-Atome ersetzen kann und, wenn zwei oder mehr H-Atome ersetzt werden, die Substituenten die gleichen oder unterschiedliche sein können.

2. Elektrolyt nach Anspruch 1, wobei in der allgemeinen Formel I die ungesättigte Bindung eine Doppelbindung ist;
die zwei -SBF₃M-Gruppen in der allgemeinen Formel I sich in einer ortho-Position, einer meta-Position, durch 2 Atome oder durch mehr als zwei Atome getrennt sein können; wobei in der allgemeinen Formel I vorzugsweise das Atom, das direkt mit der Gruppe -SBF₃M verbunden ist, ein Kohlenstoffatom C ist;
wobei vorzugsweise das Atom C, das mit der Gruppe -SBF₃M-verbunden ist, einen Carbonyl-Kohlenstoff und einen Nicht-Carbonyl-Kohlenstoff umfasst, wobei der Carbonyl-Kohlenstoff - C=O oder -C=S umfasst, der Nicht-Carbonyl-Kohlenstoff eine Struktur aufweist, die kein =O oder =S auf dem Kohlenstoffatom C enthält;
vorzugsweise das H auf einem beliebigen Kohlenstoffatom C in der allgemeinen Formel I unabhängig durch Halogen ersetzt werden kann.

3. Elektrolyt nach Anspruch 2, wobei der Substituent R ausgewählt ist aus H, Halogenatomen, Carbonyl, Ester-Gruppen, Aldehyd-Gruppen, Ether-Sauerstoff-Gruppen, Ether-Schwefel-Gruppen, =O, =S, 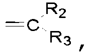 Nitro, Cyano-Gruppe, Amino, Amid, Sulfonamid, Sulfonylalkan, Sulfonsäure-Gruppen, Hydrazino, Diazo, Alkyl, Heteroalkyl, Alkenyl, Heteroalkenyl, Alkynyl, Heteroalkynyl, Alkenyl-Alkynyl, Heteroalkenyl-Alkynyl, cyclischem Substituent, Salzsubstituent und Gruppen, die durch Substituieren eines beliebigen Sauerstoffatoms H in den erwähnten Gruppen durch ein Halogenatom gebildet werden;
wobei die Estergruppe Carbonsäureester, Carbonatester, Sulfonsäureester und Phosphat umfasst, R₂ und R₃ unabhängig H, Alkyl, Heteroalkyl, Alkenyl, Heteroalkenyl, Alkynyl, Heteroalkynyl, Alkenyl-Alkynyl, Heteroalkenyl-Alkynyl oder ein Ring sind;
vorzugsweise eine beliebige Struktur des Heteroalkyls, Heteroalkenyls, Heteroalkynyls und Heteroalkenyl-Alkynyls mindestens eines der Nicht-Kohlenstoffatome enthält, die ausgewählt sind aus der Gruppe, die besteht aus Halogen, S, N, O, P, Se, Ca, Al, B oder Si; der Ringsubstituent einen drei- bis achtgliedrigen Ring und einen Mehrring umfasst, der aus mindestens zwei monocyclischen Ringen gebildet ist; die Salzsubstituenten Sulfat, Sulfonat, Sulfonimid, Carbonat, Carboxylat, Thioether-Salz, Oxyether-Salz, Ammoniumsalz, Hydrochlorid, Nitrat, Azid-Salz, Silicat, Phosphat umfassen, aber nicht darauf beschränkt sind;
das Carbonyl -R₁₀COR₁₁ ist, die Estergruppe -R₁₂COOR₁₃, - R₁₂OCOR₁₇, -R₁₂SO₂OR₁₃, R₁₂O-CO-OR₁₃ oder 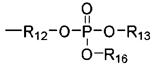 ist, die Ether-Sauerstoff-Gruppe -R₁₄OR₁₅ ist, und die Ether-Schwefel-Gruppe - R₁₄SR₁₅ ist; das Sulfonylalkan -R₁₈SO₂R₁₉ ist, das Amino =N-R₂₀, 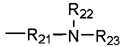 oder -CH=N-R₂₄ ist, das Amid 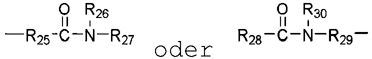 ist, das Sulfonamid 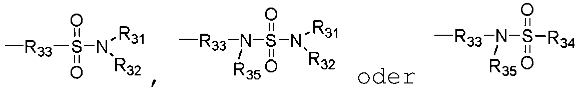 ist, wobei R₂, R₃, R₁₀, R₁₁, R₁₂, R₁₃, R₁₄, R₁₅, R₁₆, R₁₇, R₁₈, R₁₉, R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ unabhängig Alkyl, Heteroalkyl, Alkenyl, Heteroalkenyl, Alkynyl, Heteroalkynyl, Alkenyl-Alkynyl, Heteroalkenyl-Alkynyl oder ein Ring sind, das Heteroalkyl/Heteroalkenyl/Heteroalkynyl/Heteroalkenyl-Alkynyl ein Alkyl/Alkenyl/Alkynyl/Alkenyl-Alkynyl mit mindestens einem von dem Nicht-Kohlenstoffatom ist; der Ring einen Typ aufweist, der vereinbar ist mit dem Typ, der von dem Ring-Substituenten definiert ist; und R₂, R₃, R₁₀, R₁₂, R₁₄, R₁₈, R₂₀, R₂₁, R₂₂, R₂₃, R₂₄, R₂₅, R₂₆, R₂₇, R₂₉, R₃₀, R₃₁, R₃₂, R₃₃, R₃₅ unabhängig H oder nicht vorhanden sein können; die Gruppe, die direkt mit N oder O verbunden ist, auch ein Metall-Ion sein kann;
und der Substituent wahlweise ferner einen Substituenten umfasst, in dem ein beliebiges C=O in einer beliebigen der Gruppen durch C=S ersetzt ist.

4. Elektrolyt nach Anspruch 1, wobei der ungesättigte Heterocyclus R' in der allgemeinen Formel I ausgewählt ist aus den folgenden Ringen: Furan, 3,4-Dihydrofuran, 2,3-Dihydrofuran, Thiophen, 2,3-Dihydrothiophen, 3,4-Dihydrothiophen, Pyrrol, 3,4-Dihydropyrrol, 2,3-Dihydropyrrol, Imidazol, Pyrazol, Thiazol, Oxazol, Isoxazol, Triazol, Dihydrotriazol, Thiadiazol, 1,3-Dihydropyridin, 1,4-Dihydropyridin, Dihydropyrimidin, Tetrahydropyrimidin, Dihydropyrazin, Dihydropyridazin, Dihydrotriazin, Pyran, Dihydropyran, Thiopyran, Dihydrothiopyran, 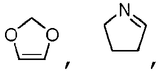 , 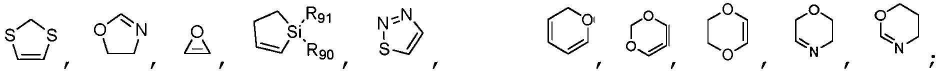 der Substituent R mit dem vorhergehend genannten Heterocyclus R' verbunden ist; zwei -SBF₃M-Gruppen direkt mit beliebigen zwei oder einem Atom von jedem des Heterocyclus R' verbunden sind oder indirekt mit beliebigen zwei oder einem Atom von jedem des Heterocyclus R' über E1 beziehungsweise E2 verbunden sind.

5. Elektrolyt nach Anspruch 4, wobei die allgemeine Formel I die folgenden Verbindungen umfasst, aber nicht darauf beschränkt ist: 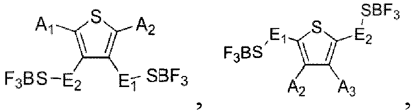 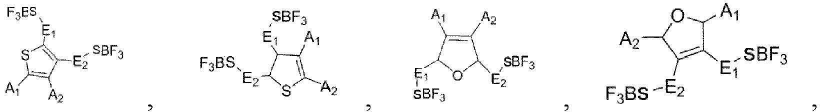 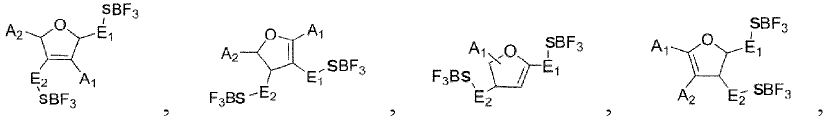 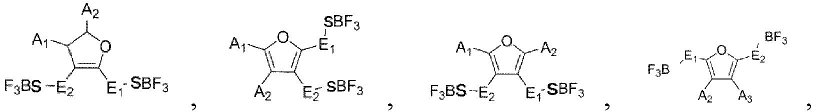 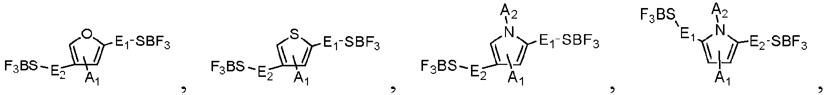 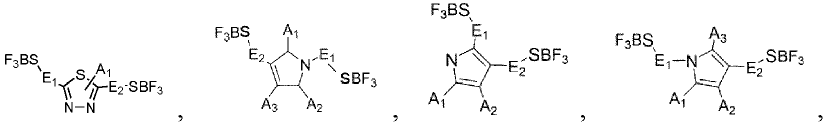 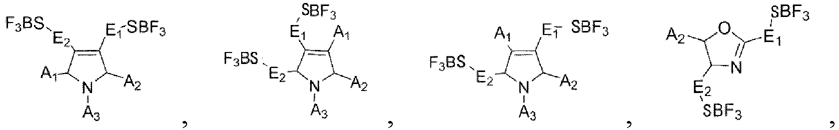 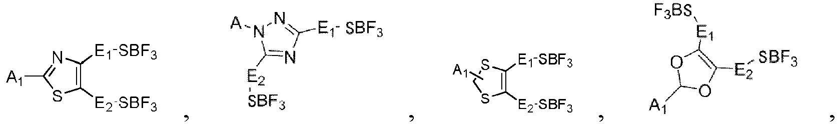 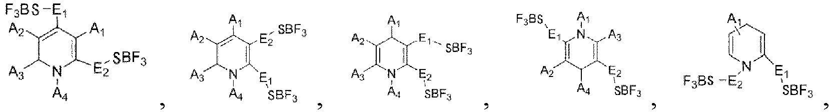 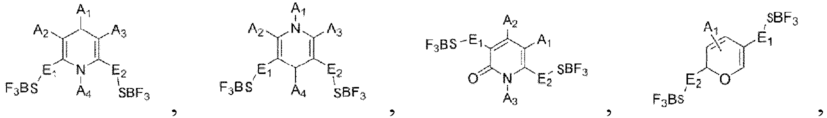 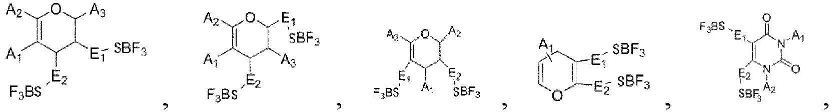 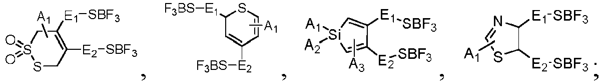
in den vorhergehenden Strukturen -SBF₃ -SBF₃M bezeichnet; E₁ und E₂ in jeder cyclischen Struktur unabhängig mit E₁ und E₂ vereinbar sind, die nach einem der Ansprüche 1 bis 4 definiert sind;
ein beliebiges H auf jedem ungesättigten Heterocyclus unabhängig ein beliebiger Substituent sein kann, der ausgewählt ist aus A₁, A₂, A₃ oder A₄, das A₁, A₂, A₃ und A₄ jeweils unabhängig ausgewählt sind aus einem beliebigen Substituenten, der von dem Substituenten R nach einem der Ansprüche 1 bis 4 definiert ist.

6. Elektrolyt nach einem der Ansprüche 3 bis 5, wobei das Halogenatom in dem Substituenten R, A₁, A₂, A₃ oder A₄ F, Cl, Br, I umfasst;
R₂, R₃, R₁₀, R₁₁, R₁₂, R₁₃, R₁₄, R₁₅, R₁₆, R₁₇, R₁₈, R₁₉, R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ unabhängig voneinander C₁₋₁₀-Alkyl, C₁₋₁₀-Heteroalkyl, C₁₋₁₀-Alkenyl oder C₁₋₁₀-Heteroalkenyl sind, wobei das Heteroalkyl oder Heteroalkenyl ein Alkyl oder Alkenyl mit mindestens einem Heteroatom ist; R₂, R₃, R₁₀, R₁₂, R₁₄, R₁₈, R₂₀, R₂₁, R₂₂, R₂₃, R₂₄, R₂₅, R₂₆, R₂₇, R₂₉, R₃₀, R₃₁, R₃₂, R₃₃, R₃₅ unabhängig voneinander H oder nicht vorhanden sein können, und die direkt an N oder O gebundene Gruppe auch ein Metallion sein kann;
die Cyanogruppe ausgewählt ist aus -CN, -CH₂CN, -SCH₂CH₂CN oder -CH₂CH₂CN.

7. Verfahren zur Herstellung des Elektrolyten nach einem der Ansprüche 1 bis 6, umfassend den Schritt des Reagierens einer ungesättigten heterocyclischen binären Struktur, die zwei Gruppen -SH, eine Bortrifluorid-basierte Verbindung und eine M-Quelle enthält, um ein Produkt, nämlich ein ungesättigtes heterocyclisches schwefelbasiertes Bortrifluoridsalz, das zwei Gruppen -SBF₃M enthält, zu erhalten.

8. Verwendung des schwefelbasierten Bortrifluoridsalzes, das einen ungesättigten Heterocyclus nach einem der Ansprüche 1 bis 6 in einer Lithium-Sekundärbatterie enthält, wobei die Verwendung wie folgt ist: das Bortrfluoridsalz, das von der allgemeinen Formel I dargestellt ist, kann als Salz und auch als Zusatzstoff verwendet werden, und ein polymerisierbares Monomer kann auch als ein Einzelionenleiter-Polymerelektrolyt und ein Polymergerüst nach der Polymerisierung verwendet werden;
die Verwendung vorzugsweise eine Verwendung in einem Flüssigelektrolyten, einem Gelelektrolyten, einem Fest-Flüssig-Hybridelektrolyten, einem Quasi-Festkörperelektrolyten und einem Festkörperelektrolyten umfasst; wobei jeder von dem Flüssigelektrolyten, dem Gelelektrolyten, dem Fest-Flüssig-Hybridelektrolyten, dem Quasi-Festkörperelektrolyten und einem Festkörperelektrolyten unabhängig das schwefelbasierte Bortrifluoridsalz umfasst, das einen ungesättigten Heterocyclus nach einem der Ansprüche 1 bis 6 enthält;
wobei die Verwendung vorzugsweise eine Verwendung als eine Batterie oder ein Batteriepack umfasst, wobei die Batterie den schwefelbasierten Bortrifluoridsalzelektrolyten, der einen ungesättigten Heterocyclus nach einem der Ansprüche 1 bis 6 enthält, und eine Anode, eine Kathode, einen Separator und eine Kapselungsschale umfasst; wobei die Batterie eine Flüssigbatterie, eine Fest-Flüssig-Hybridbatterie, eine Halbfeststoffbatterie, eine Gelbatterie, eine Quasi-Feststoffbatterie und eine Feststoffbatterie umfasst, wobei jeder von dem Flüssigelektrolyten, dem Gelelektrolyten, dem Fest-Flüssig-Hybridelektrolyten, dem Quasi-Festkörperelektrolyten oder einem Festkörperelektrolyten in der Flüssigbatterie, der Fest-Flüssig-Hybridbatterie, der Halbfestkörperbatterie, der Gelbatterie, der Quasi-Festkörperbatterie oder der Festkörperbatterie verwendet werden kann; der Batteriepack die Batterie umfasst.

## Revendications

1. Électrolyte de sel de trifluorure de bore à base de soufre contenant un hétérocycle insaturé comprenant un sel de trifluorure de bore à base de soufre hétérocyclique insaturé représenté par la formule générale I : 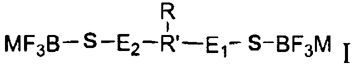
dans la formule générale I, R' représente un hétérocycle insaturé contenant au moins un hétéroatome et au moins une liaison insaturée ; l'hétérocycle insaturé est un cycle de cinq à six chaînons ; l'hétéroatome est choisi dans le groupe consistant en S, N, O, P ou Si ; M est un cation métallique, où M dans la formule générale I comprend Na⁺, K⁺ ou Li⁺ ; E₁ et E₂ sont indépendamment non existants ou choisis dans le groupe consistant en non existant, -CH₂-, carbonyle, groupes ester, éthyle, n-propyle, isopropyle, n-butyle, isobutyle, n-pentyle, isopentyle, sec-pentyle, néopentyle, hexyle, vinyle, propènyle, butènyle, pentènyle, éthynyle, propynyle, butynyle, cyclohexyle, cyclopentyle, 1,3-hexadiènyle, -C=N-, -C(CH₃)₂-, -CH(CH₃)-, - C(CF₃)₂-, -SCH₂CH₂-, -CH₂CH₂SCH₂CH₂-, -CH₂CH₂CH(CH₃)-, -Z'₁CH₂CH₂-, -O-CH₂(CH₂)₄CH₂-, -N=C(CH₃)-, -O-(CH₂)₆-, -CH₂Z'₁CH₂-, - CH₂(CH₃)Z'CH₂-, -CH₂CH₂Z'₁CH₂-, 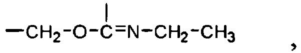 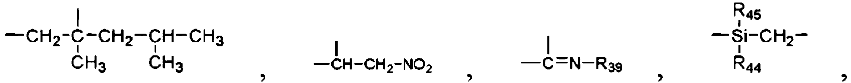 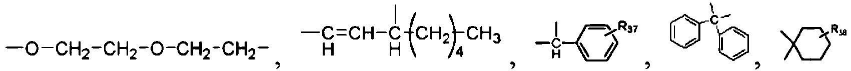
et les groupes formés après C=O de l'un quelconque des groupes susmentionnés sont remplacés par C=S, et les groupes formés après C-O de l'un quelconque des groupes susmentionnés sont remplacés par C-S ; le carbonyle comprend -CO-, -CH₂CO-, - CH₂CH₂CO-, -CH₂CH₂CH₂CO-, -CH₂COCH₂-, -CH₂CH₂COCH₂-, -CH=CH-CO-, - OCH₂CH₂CH₂CO-, =N-CH₂-CO-, -Z'₁CH₂CO-, -Z'₁CH₂CH₂CO-, - Z'₁CH₂CH₂CH₂CO-, -CH₂(CH₂)₅CO-, -CH₂(CH₂)₆CO-, 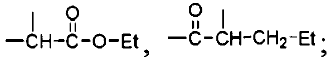 les groupes ester comprennent - COOCH₂-, -COOCH₂CH₂-, et -CH₂COOCH₂- ; où Z'₁ dans ce paragraphe est choisi dans le groupe consistant en -O-, -S-, -S-S-, 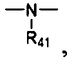 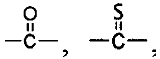 groupe sulfonyle, sulfonimidyle, ou sulfonyloxy, où R₄₁ est H, méthyle, éthyle, propyle, isopropyle, butyle, éthoxyle ou méthoxyle, et tout atome d'hydrogène H dans R₄₁ peut être substitué par F ou Cl ; R₄₄, R₄₅ sont indépendamment alkyle ou cyclique ; R₃₉ est choisi parmi H, méthyle, éthyle, propyle, butyle, pentyle, cyclopropyle, cyclopentyle, cyclohexyle, nitro, thiazole, -CH(CH₃)₂, -CH₂CH(CH₃)₂, -CH₂CH₂NO₃, 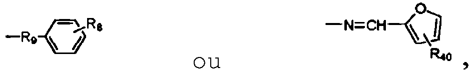
où R₈, R₃₇, R₃₈ et R₄₀ sont indépendamment non existants, un atome d'halogène, un groupe méthyle, éthyle, propyle, butyle, fluorométhyle, fluoroéthyle, méthoxy, nitro, aldéhyde, une cétone, un ester, -CH₂-N(CH₃)₂ ou -CH(CH₃)-Ph, R₉ est non existant ou méthylène ;
R est un substituant, représente un atome H quelconque sur le cycle pouvant être remplacé par le substituant, le substituant peut remplacer un atome de H ou remplacer deux atomes de H ou plus, et si deux atomes de H ou plus sont remplacés, les substituants peuvent être identiques ou différents.

2. Électrolyte selon la revendication 1, dans lequel, dans la formule générale I, la liaison insaturée est une double liaison ;
les deux groupes -SBF₃M dans la formule générale I peuvent être en position ortho, en position méta, séparés par 2 atomes ou séparés par plus de deux atomes ; de préférence dans la formule générale I, l'atome directement relié au groupe -SBF₃M est l'atome de carbone C ;
de préférence, l'atome de carbone C relié au groupe -SBF₃M comprend un carbone carbonyle et un carbone non carbonyle, où le carbone carbonyle comprend -C=O ou -C=S, le carbone non carbonyle a une structure sans contenir =O ou =S sur l'atome de carbone C ;
de préférence, le H sur un atome de carbone C quelconque dans la formule générale I peut être remplacé indépendamment par l'halogène.

3. Électrolyte selon la revendication 2, dans lequel le substituant R est choisi parmi H, des atomes d'halogène, des groupes carbonyle, ester, des groupes aldéhyde, des groupes oxygène éther, des groupes soufre éther, =O, =S, 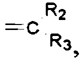
un groupe nitro, cyano, des groupes amino, amide, sulfonamido, sulfonylalcane, acide sulfonique, hydrazino, diazo, alkyle, hétéroalkyle, alcényle, hétéroalcényle, alcynyle, hétéroalcynyle, alcényl-alcynyle, hétéroalcényl-alcynyle, substituant cyclique, substituant sel, et des groupes formés en substituant tout atome d'hydrogène H dans les groupes susmentionnés par un atome d'halogène ;
où le groupe ester comprend l'ester carboxylique, l'ester carbonique, l'ester sulfonique et le phosphate, R₂ et R₃ sont indépendamment H, alkyle, hétéroalkyle, alcényle, hétéroalcényle, alcynyle, hétéroalcynyle, alcényl-alcynyle, hétéroalcényl-alcynyle, ou un cycle ;
de préférence, une structure quelconque de l'hétéroalkyle, l'hétéroalcényle, l'hétéroalcynyle, et l'hétéroalcényl-alcynyle contient au moins un élément parmi les atomes non carbone choisis dans le groupe consistant en halogène, S, N, O, P, Se, Ca, Al, B, ou Si ; le substituant cyclique comprend un cycle de trois à huit chaînons et un multi-cycle formé par au moins deux cycles monocycliques ; les substituants sel comprennent, mais sans y être limités, le sulfate, sulfonate, sulfonimide, carbonate, carboxylate, sel de thioéther, sel d'oxyéther, sel d'ammonium, chlorhydrate, nitrate, sel d'azide, silicate, phosphate ;
le carbonyle est -R₁₀COR₁₁, le groupe ester est -R₁₂COOR_{13,} - R₁₂OCOR₁₇, -R₁₂SO₂OR₁₃, R₁₂O-CO-OR₁₃, ou 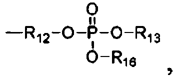 le groupe oxygène éther est -R₁₄OR₁₅, et le groupe soufre éther est -R₁₄SR₁₅ ; le sulfonylalcane est - R₁₈SO₂R₁₉, l'amino est =N-R₂₀, 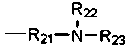
ou -CH=N-R₂₄, l'amide est 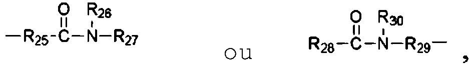 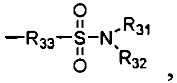 le sulfonamido est 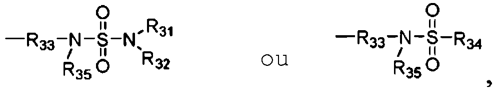
où R₂, R₃, R₁₀, R₁₁, R₁₂, R₁₃, R₁₄, R₁₅, R₁₆, R₁₇, R₁₈, R₁₉, R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ sont indépendamment alkyle, hétéroalkyle, alcényle, hétéroalcényle, alcynyle, hétéroalcynyle, alcényl-alcynyle, hétéroalcényl-alcynyle, ou cyclique, l'hétéroalkyle / l'hétéroalcényle / l'hétéroalcynyle / l'hétéroalcényl-alcynyle est un alkyle / alcényle / alcynyle / alcényl-alcynyle ayant au moins un atome non carbone ; le cycle a un type cohérent avec le type défini par le substituant cyclique ; et R₂, R₃, R₁₀, R₁₂, R₁₄, R₁₈, R₂₀, R₂₁, R₂₂, R₂₃, R₂₄, R₂₅, R₂₆, R₂₇, R₂₈, R₂₉, R₃₀, R₃₁, R₃₂, R₃₃, R₃₅ peuvent être indépendamment H ou non existants ; le groupe directement relié avec N ou O peut être aussi un ion métallique ;
et éventuellement, le substituant comprend en outre un substituant dans lequel un C=O quelconque dans l'un quelconque des groupes est remplacé par C=S.

4. Électrolyte selon la revendication 1, dans lequel l'hétérocycle insaturé R' dans la formule générale I est choisi parmi les cycles suivants : furane, 3,4-dihydrofurane, 2,3-dihydrofurane, thiophène, 2,3-dihydrothiophène, 3,4-dihydrothiophène, pyrrole, 3,4-dihydropyrrole, 2,3-dihydropyrrole, imidazole, pyrazole, thiazole, oxazole, isoxazole, triazole, dihydrotriazole, thiadiazole, 1,3-dihydropyridine, 1,4-dihydropyridine, dihydropyrimidine, tétrahydropyrimidine, dihydropyrazine, dihydropyridazine, dihydrotriazine, pyrane, dihydropyrane, thiopyrane, 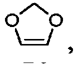 dihydrothiopyrane, 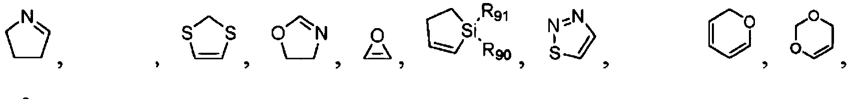 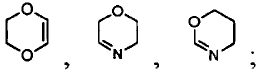 le substituant R est relié à l'hétérocycle susmentionné R' ; deux groupes -SBF₃M sont reliés directement à deux atomes quelconques ou un atome de chacun de l'hétérocycle R', ou reliés indirectement à deux atomes quelconques ou un atome de chacun de l'hétérocycle R', via E1, E2, respectivement.

5. Électrolyte selon la revendication 4, dans lequel la formule générale I comprend, mais sans y 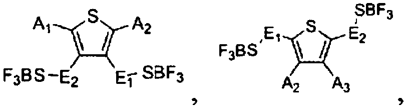 être limité, les composés suivants : 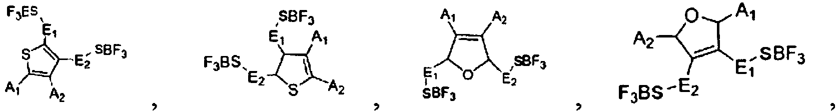 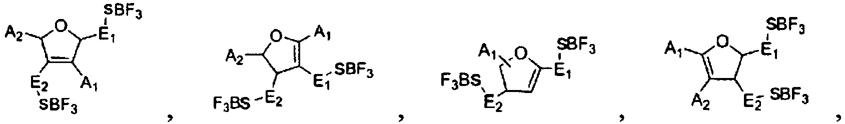 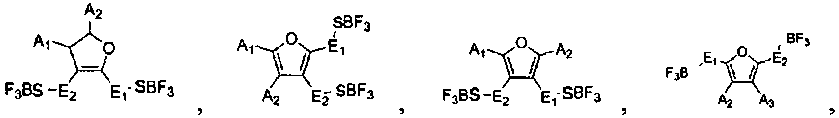 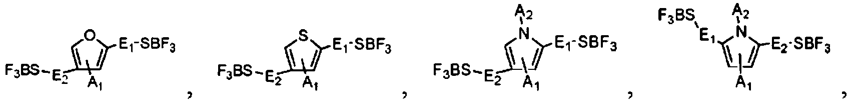 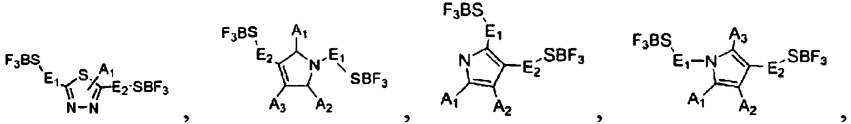 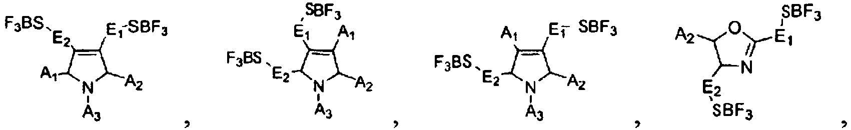 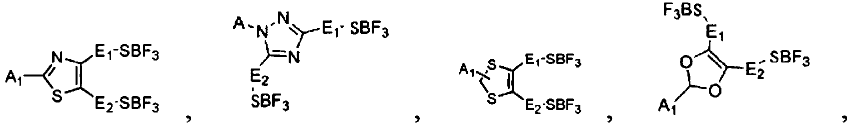 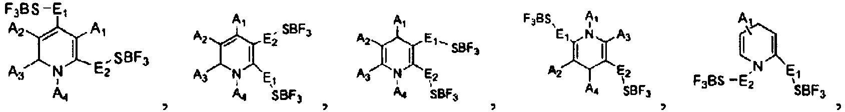 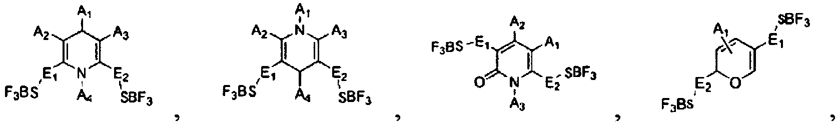 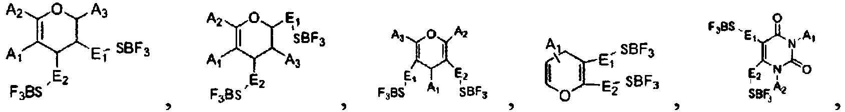 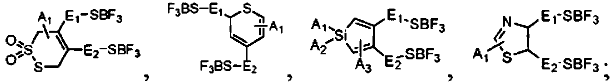
dans les structures ci-dessus, -SBF₃ désigne -SBF₃M ; E₁ et E₂ dans chaque structure cyclique sont compatibles indépendamment avec E₁ et E₂ définis par l'une quelconque des revendications 1 à 4 ;
un H quelconque sur chaque hétérocycle insaturé peut être indépendamment un substituant quelconque choisi parmi A₁, A₂, A₃ ou A₄, les A₁, A₂, A₃ et A₄ sont chacun indépendamment choisis parmi un substituant quelconque défini par le substituant R selon l'une quelconque des revendications 1 à 4.

6. Électrolyte selon l'une quelconque des revendications 3 à 5, dans lequel l'atome d'halogène dans les substituants R, A₁, A₂, A₃ ou A₄ comprend F, Cl, Br, I ;
R₂, R₃, R₁₀, R₁₁, R₁₂, R₁₃, R₁₄, R₁₅, R₁₆, R₁₇, R₁₈, R₁₉, R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ sont indépendamment alkyle en C₁₋₁₀, hétéroalkyle C₁₋₁₀, alcényle C₁₋₁₀ ou hétéroalcényle en C₁₋₁₀, l'hétéroalkyle ou l'hétéroalcényle est un alkyle ou alcényle ayant au moins un hétéroatome ; R₂, R₃, R₁₀, R₁₂, R₁₄, R₁₈, R₂₀, R₂₁, R₂₂, R₂₃, R₂₄, R₂₅, R₂₆, R₂₇, R₂₈, R₂₉, R₃₀, R₃₁, R₃₂, R₃₃, R₃₅ peuvent être indépendamment H ou non existant, et le groupe directement relié à N ou O peut être également un ion métallique ;
le groupe cyano est choisi parmi -CN, -CH₂CN, -SCH₂CH₂CN, ou -CH₂CH₂CN.

7. Méthode de préparation de l'électrolyte selon l'une quelconque des revendications 1 à 6 comprenant l'étape de réaction d'une structure binaire hétérocyclique insaturée contenant deux groupes -SH, un composé à base de trifluorure de bore et une source M pour obtenir un produit, notamment un sel de trifluorure de bore à base de soufre hétérocyclique insaturé contenant deux groupes -SBF₃M.

8. Utilisation du sel de trifluorure de bore à base de soufre contenant un hétérocycle insaturé selon l'une quelconque des revendications 1 à 6 dans une batterie secondaire au lithium, où l'utilisation est la suivante : le sel de trifluorure de bore représenté par la formule générale I peut être utilisé comme sel et également comme additif, et un monomère polymérisable peut aussi être utilisé comme électrolyte polymère conducteur à ion unique et un squelette polymère après polymérisation ;
de préférence, l'utilisation comprend une utilisation dans un électrolyte à l'état liquide, un électrolyte gel, un électrolyte hybride solide-liquide, un électrolyte à l'état quasi solide, et un électrolyte à l'état tout solide ; chacun des électrolyte à l'état liquide, électrolyte gel, électrolyte hybride solide-liquide, électrolyte à l'état quasi solide, et électrolyte à l'état tout solide comprend indépendamment le sel de trifluorure de bore à base de soufre contenant un hétérocycle insaturé selon l'une quelconque des revendications 1 à 6 ;
de préférence, l'utilisation comprend en outre une utilisation en tant que batterie ou bloc batterie, la batterie comprend l'électrolyte de sel de trifluorure de bore à base de soufre contenant un hétérocycle insaturé selon l'une quelconque des revendications 1 à 6 et une anode, une cathode, un séparateur, et une coque d'encapsulation ; la batterie comprend une batterie à l'état liquide, une batterie hybride solide-liquide, une batterie à l'état semi-solide, une batterie gel, une batterie à l'état quasi-solide et une batterie à l'état tout solide, où chacun des électrolyte à l'état liquide, électrolyte gel, électrolyte hybride solide-liquide, électrolyte à l'état quasi solide, et électrolyte à l'état tout solide peut être utilisé dans la batterie liquide, la batterie hybride solide-liquide, la batterie à l'état semi-solide, la batterie gel, la batterie à l'état quasi-solide ou la batterie à l'état tout solide ; le bloc batterie comprend la batterie.
